(19) Europäisches Patentamt
European Patent Office
Office européen des brevets

(11) **EP 3 316 589 B1**

(12) **EUROPEAN PATENT SPECIFICATION**

(45) Date of publication and mention
of the grant of the patent:
**28.02.2024 Bulletin 2024/09**

(51) International Patent Classification (IPC):
**H04N 21/43** (2011.01)     **H04N 5/93** (2006.01)
**H04N 21/242** (2011.01)

(21) Application number: **16813879.0**

(22) Date of filing: **18.03.2016**

(52) Cooperative Patent Classification (CPC):
**H04N 21/242; G06T 7/593; G06V 20/48;**
**H04N 5/77; H04N 5/935; H04N 13/243;**
**H04N 13/296; H04N 21/23418;** H04N 2013/0096

(86) International application number:
**PCT/JP2016/001584**

(87) International publication number:
**WO 2016/208102 (29.12.2016 Gazette 2016/52)**

(54) **VIDEO SYNCHRONIZATION DEVICE AND VIDEO SYNCHRONIZATION METHOD**

VIDEOSYNCHRONISATIONSVORRICHTUNG UND VIDEOSYNCHRONISATIONSVERFAHREN

DISPOSITIF DE SYNCHRONISATION VIDÉO ET PROCÉDÉ DE SYNCHRONISATION VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2015 JP 2015127275**
**23.02.2016 JP 2016032521**

(43) Date of publication of application:
**02.05.2018 Bulletin 2018/18**

(73) Proprietor: **Panasonic Intellectual Property Management Co., Ltd.**
**Osaka-shi, Osaka 540-6207 (JP)**

(72) Inventors:
• **KOYAMA, Tatsuya**
**Osaka 540-6207 (JP)**
• **SUGIO, Toshiyasu**
**Osaka 540-6207 (JP)**
• **MATSUNOBU, Toru**
**Osaka 540-6207 (JP)**

(74) Representative: **Grünecker Patent- und Rechtsanwälte**
**PartG mbB**
**Leopoldstraße 4**
**80802 München (DE)**

(56) References cited:
**JP-A- 2014 064 135     US-A1- 2014 078 332**

• **Daniel Wedge: "VIDEO SEQUENCE SYNCHRONIZATION", Thesis, 2 July 2007 (2007-07-02), XP055003495, The University of Western Australia Retrieved from the Internet: URL:http://people.csse.uwa.edu.au/pk/stude ntprojects/daniel/thesis.pdf [retrieved on 2011-07-25]**
• **DAVIES E ROY ED - DAVIES E ROY: "Machine vision: theory, algorithms, practicalities", 1 January 2005 (2005-01-01), MACHINE VISION: THEORY, ALGORITHMS, PRACTICALITIES, MORGAN KAUFMANN, AMSTERDAM, PAGE(S) 1 - 973, XP040425677, ISBN: 978-0-12-206093-9 * page 609, line 8 - page 623, line 5 ***
• **MANTZEL W E ET AL: "Distributed camera network localization", SIGNALS, SYSTEMS AND COMPUTERS, 2004. CONFERENCE RECORD OF THE THIRTY- EIGHTH ASILOMAR CONFERENCE ON PACIFIC GROVE, CA, USA NOV. 7-10, 2004, PISCATAWAY, NJ, USA, IEEE, vol. 2, 7 November 2004 (2004-11-07), pages 1381-1386, XP010781262, DOI: 10.1109/ACSSC.2004.1399380 ISBN: 978-0-7803-8622-8**

- **HARTLEY R ET AL: "Epipolar Geometry and the Fundamental Matrix", 1 January 2003 (2003-01-01), MULTIPLE VIEW GEOMETRY IN COMPUTER VISION, CAMBRIDGE UNIVERSITY PRESS, GB, PAGE(S) 239 - 261, XP007917550,**

## Description

The present disclosure relates to a video synchronization apparatus and a video synchronization method that synchronize a plurality of videos captured by a plurality of cameras.

In recent years, due to widespread use of digital cameras and smartphones, there are many instances of one scene being captured from multiple viewpoints. Also, due to development of social networking services and wide area networks, a plurality of videos captured from multiple viewpoints are shared on the Internet. It is expected that, in the future, anyone will be able to easily acquire such videos. If such videos are used, a free viewpoint video which can be viewed from a viewpoint according to an individual's preference may possibly be created, or a three-dimensional model of a subject may possibly be created by measuring a three-dimensional shape of the subject, by using software in a PC or an application in a smartphone owned by the individual.

However, to create a free viewpoint video or a three-dimensional model from a plurality of videos or a plurality of image frames, a plurality of videos or a plurality of image frames captured at the same time have to be used. However, most of the videos that are shared on the Internet and that can be easily acquired are assumed as not synchronously captured. Accordingly, a person has to decide the videos or the image frames that have been captured at the same time in a plurality of acquired videos and extract the videos or the image frames, but this task takes a lot of effort, and a method for automatically synchronizing a plurality of videos is much anticipated.

Conventionally, to synchronize a plurality of videos, there is proposed a method for extracting a visual feature point in a target frame in a video, and for determining a frame in another video, having a similar feature point, as a frame which has been captured at the same time as the target frame (for example , see PTL 1). In addition, PTL 2 discloses an approach that detects particular movements in a reference video and determines whether these movements exist in other videos.

Document from Daniel Wedge: "VIDEO SEQUENCE SYNCHRONIZATION",Thesis, 2 July 2007 (2007-07-02), XP055003495,The University of Western Australia, discloses synchronization between two video streams based on features and using the fundamental matrix which encapsulates the epipolar geometry relating two cameras; enforcing the epipolar constraint can be used as method of synchronizing two video sequences containing free motion in 3D space.

Patent Literature

PTL 1: Unexamined Japanese Patent Publication No. 2010-268325
PTL 2: US 2014/078332 A1

With the conventional method, a similarity between feature points is determined by matching based on a squared error or an absolute error in a luminance gradient or colors of pixels in specific ranges around the feature points, but determination of a similarity between feature points by such methods tends to be erroneous when there are a plurality of visually similar feature points in one frame. This may result in erroneous determination of a frame captured at the same time, and synchronization accuracy of a plurality of videos may be reduced.

The present disclosure has been made in view of solving the problems described above, and an object thereof is to provide a video synchronization apparatus or a video synchronization method with high synchronization accuracy.

This is achieved by the features of the independent claims.

The present disclosure can provide a video synchronization apparatus or a video synchronization method with high synchronization accuracy.

FIG. 1 is a diagram illustrating a configuration of a video synchronization system according to a first exemplary embodiment.
FIG. 2 is a diagram illustrating a configuration of a synchronization processor according to the first exemplary embodiment.
FIG. 3 is a diagram describing matching information.
FIG. 4 is a conceptual diagram of triangulation.
FIG. 5 is a flowchart of synchronization processing performed by the synchronization processor according to the first exemplary embodiment.
FIG. 6 is a flowchart of matching information correction processing according to the first exemplary embodiment.
FIG. 7 is a flowchart of synchronization frame determination processing according to the first exemplary embodiment.
FIG. 8A is a diagram illustrating examples of candidates extracted as candidate synchronization frames from frames in different videos according to the first exemplary embodiment.

FIG. 8B is a diagram illustrating examples of synchronization frames determined from candidate synchronization frames according to the first exemplary embodiment.

FIG. 9A is a diagram illustrating other examples of candidates extracted as candidate synchronization frames from frames in different videos according to the first exemplary embodiment.

FIG. 9B is a diagram illustrating other examples of synchronization frames determined from candidate synchronization frames according to the first exemplary embodiment.

FIG. 10A is a diagram illustrating other examples of candidates extracted as candidate synchronization frames from frames in different videos according to the first exemplary embodiment.

FIG. 10B is a diagram illustrating other examples of synchronization frames determined from candidate synchronization frames according to the first exemplary embodiment.

FIG. 11A is a diagram illustrating examples of synchronization frames determined from frames in different videos according to the first exemplary embodiment.

FIG. 11B is a diagram illustrating an example of a synchronization frame interpolation method according to the first exemplary embodiment.

FIG. 12A is a diagram illustrating a (fourth) example of determination of synchronization frames according to the first exemplary embodiment according to the first exemplary embodiment.

FIG. 12B is a diagram illustrating the (fourth) example of determination of synchronization frames according to the first exemplary embodiment according to the first exemplary embodiment.

FIG. 13 is a flowchart of synchronization frame determination processing according to a second exemplary embodiment.

FIG. 14A is a diagram illustrating an example of determination of synchronization frames according to the second exemplary embodiment.

FIG. 14B is a diagram illustrating the example of determination of synchronization frames according to the second exemplary embodiment.

FIG. 15 is a diagram illustrating a configuration of a video information processing system.

FIG. 16 is a diagram illustrating an example of a notification screen displayed when a camera is activated.

FIG. 17 is an overall configuration diagram of a content providing system that implements content distribution services.

FIG. 18 is an overall configuration diagram of a digital broadcasting system.

FIG. 19 is a diagram illustrating an example of a smartphone.

FIG. 20 is a block diagram illustrating a configuration example of a smartphone.

The present invention is defined by the features of the appended claims.

Exemplary embodiments will be specifically described below with reference to the drawings.

Note that each of the exemplary embodiments described below illustrates a specific example of the present disclosure. Numerical values, shapes, materials, components, arrangement and connection forms of the components, steps, order of the steps, and the like described in the following exemplary embodiments are examples, and do not intend to limit the present disclosure. Moreover, components that are described in the following exemplary embodiments, but that are not described in independent claims, which represent the highest concept, are described as optional components.

FIRST EXEMPLARY EMBODIMENT

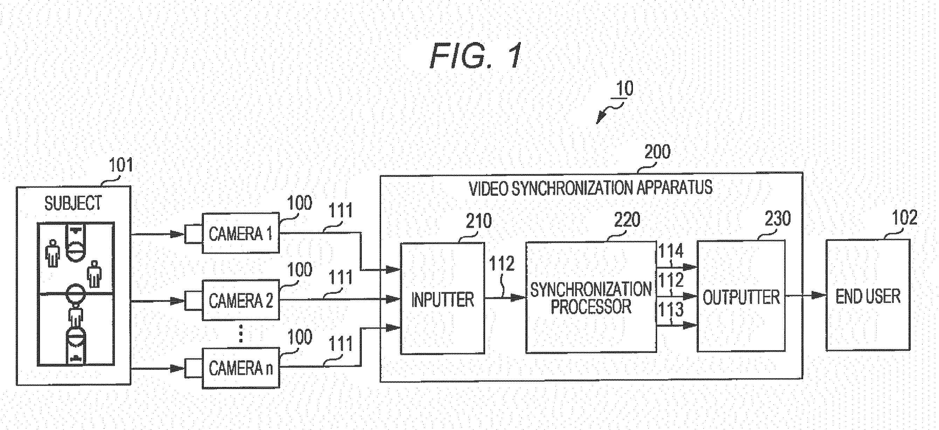

First, a configuration of a video synchronization system according to the present exemplary embodiment will be described. FIG. 1 is a diagram illustrating a configuration of the video synchronization system according to the present exemplary embodiment.

Video synchronization system 10 according to the present exemplary embodiment includes subject 101, a plurality of cameras 100, video synchronization apparatus 200 to which a plurality of videos 111 are input, and end user 102. For example, subject 101 is a scene from a basketball game. The plurality of cameras 100 capture images of subject 101, and output a plurality of captured videos 111. Moreover, a part or all of the plurality of videos 111 captured by the plurality of cameras 100 may be temporarily recorded in an external storage device, such as a memory or a cloud server, without being output in real time, and the plurality of videos 111 may be output from the external storage device. Each of the plurality of cameras 100 may be a fixed camera such as a monitoring camera, a mobile camera such as a video camera, a smartphone or a wearable camera, or a moving camera such as drone with a capturing function.

As described above, subject 101 is, as a whole, captured by one or more types of cameras 100. Each camera 100 is connected, wirelessly or with wires, to inputter 210 itself of video synchronization apparatus 200, or to a communication device or a hub of a server so that a plurality of captured videos 111 are input to inputter 210.

Video synchronization apparatus 200 includes inputter 210, synchronization processor 220, and outputter 230. Video synchronization apparatus 200 includes at least a computer system including processing circuitry such as a processor or a logic circuit and a recording device such as an internal memory or an accessible external memory. Video synchronization apparatus 200 is realized by hardware implementation by processing circuitry, or by execution, by processing circuitry, of a software program kept in a memory or distributed by an external server, or a combination of hardware implementation and software implementation.

After receiving a plurality of videos 111, inputter 210 performs preprocessing on the plurality of videos 111. For example, the preprocessing is brightness adjustment, noise removal, resolution conversion for making the resolution uniform among a plurality of videos, frame conversion for making the frame rate uniform, or a combination thereof. Inputter 210 keeps a plurality of preprocessed videos 112 in an internal or external memory, and outputs preprocessed video 112 to synchronization processor 220 in each specific section of a predetermined period of time or a predetermined number of frames.

The specific section may be set in advance, or may be set according to a predetermined condition regarding the frame rate, the resolution or the like, or may be flexibly set and changed by a user. Moreover, the specific section is a signal section of a predetermined time, or a signal section containing a predetermined number of frames, but the specific section may alternatively be the entire section of a signal, and in this case, inputter 210 outputs the signal of an entire video.

Synchronization processor 220 adds synchronization information 113 to a plurality of input videos 112, and outputs the plurality of videos 112 to outputter 230 together with synchronization information 113. In addition to the plurality of videos 112 to which synchronization information 113 is added, synchronization processor 220 may also output, to outputter 230, camera information 114 which has been estimated at the time of calculation of synchronization information 113. Synchronization information 113 is information that indicates the simultaneously captured frame number or a shift in the capturing start time for the plurality of videos 112, for example. Camera information 114 indicates the position of the camera, the orientation of the camera, and internal parameters of the camera (focal length, lens distortion coefficient, etc.).

When a plurality of videos to which synchronization information 113 is attached are received, outputter 230 synchronously reproduces the plurality of videos 112 by using synchronization information 113 and camera information 114. Note that, at this time, video selection may be performed so as to synchronously reproduce only videos which have been captured by cameras which are close to each other or which are away from each other, for example. Also, outputter 230 may detect matching points in two or more frames, in different videos, which are targets of synchronization, by using synchronization information 113, to generate a three-dimensional video by calculating coordinates in a three-dimensional space from the coordinates of the matching point in each frame, and reproduce the generated three-dimensional video. At this time, information indicating the camera position or orientation may be added to the three-dimensional video, and a three-dimensional video may be generated in which the position or the direction from which capturing has been performed is visually displayed. Furthermore, in the generation of a three-dimensional video, camera information 114 estimated at the time of calculation of synchronization information 113 may be used, and a three-dimensional video may be generated by a method such as a volume intersection method or a multi-view stereo method. Moreover, outputter 230 may present a plurality of videos 112 to an end user by generating a panoramic video joining the plurality of videos 112 into one video. Generated videos are presented to end user 102 by being displayed on a display provided to video synchronization apparatus 200 or on a display connected to video synchronization apparatus 200 with wires or wirelessly. Also, generated videos may be distributed to a terminal of end user 102 via a network.

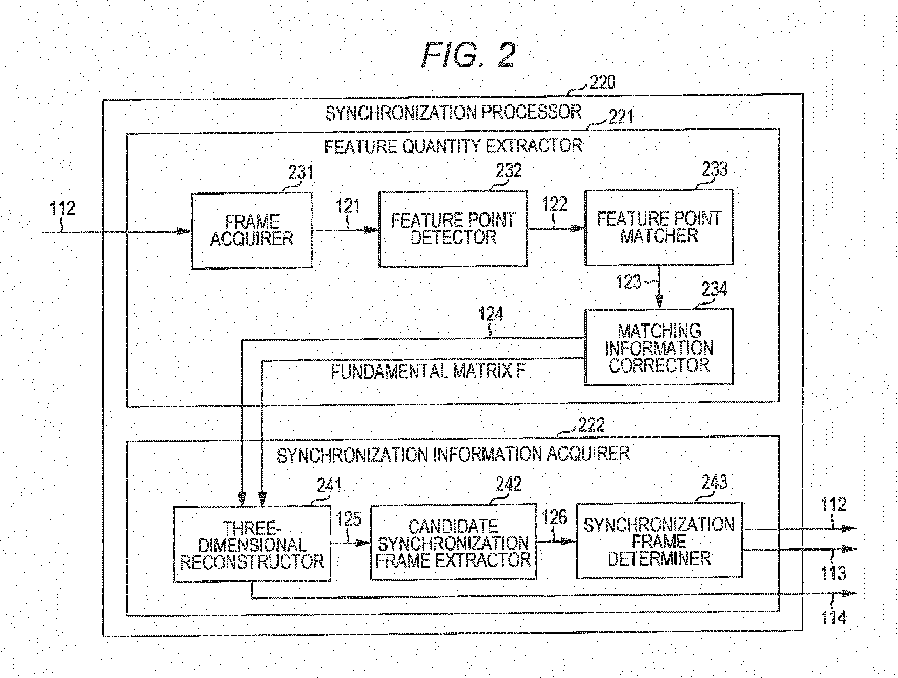

FIG. 2 is a block diagram illustrating a configuration of synchronization processor 220 according to the present exemplary embodiment. Synchronization processor 220 includes feature quantity extractor 221 and synchronization information acquirer 222.

Feature quantity extractor 221 includes frame acquirer 231, feature point detector 232, feature point matcher 233, and matching information corrector 234.

When a plurality of videos 112, which are a plurality of signals of a specific section, are received from inputter 210, frame acquirer 231 extracts one or more frames 121 (image frames) from each of the plurality of videos 112.

Feature point detector 232 detects a feature point in each extracted frame 121, and outputs feature point information 122 indicating the detected feature point. A feature point indicates a contour of an object included in a frame, a corner of an object or a space, or a point, an edge or a specific region where a difference in luminance or hue between the point, the edge or the specific region and its surroundings is great, such as an intersecting point of objects on a frame plane. Feature point information 122 expresses, by a vector, a distribution of luminance gradient or colors of pixels in a specific range having the feature point at substantially the center or including the feature point. Note that the feature point and feature point information 122 may be detected using other pieces of image information such as texture information or information after frequency conversion.

When detected feature point information 122 is received, feature point matcher 233 obtains, as a pair of feature points, feature points, with similar feature point information 122, that are included in respective two frames extracted from different videos. Furthermore, feature point matcher 233 calculates respective coordinates of the pair of feature points on a two-dimensional frame, and outputs matching information 123 indicating the calculated coordinates. A pair of similar feature points is referred to as matching points. Feature point matcher 233 determines whether or not two pieces of feature point information 122 are similar by using a squared error or an absolute error between the two pieces of feature point information 122.

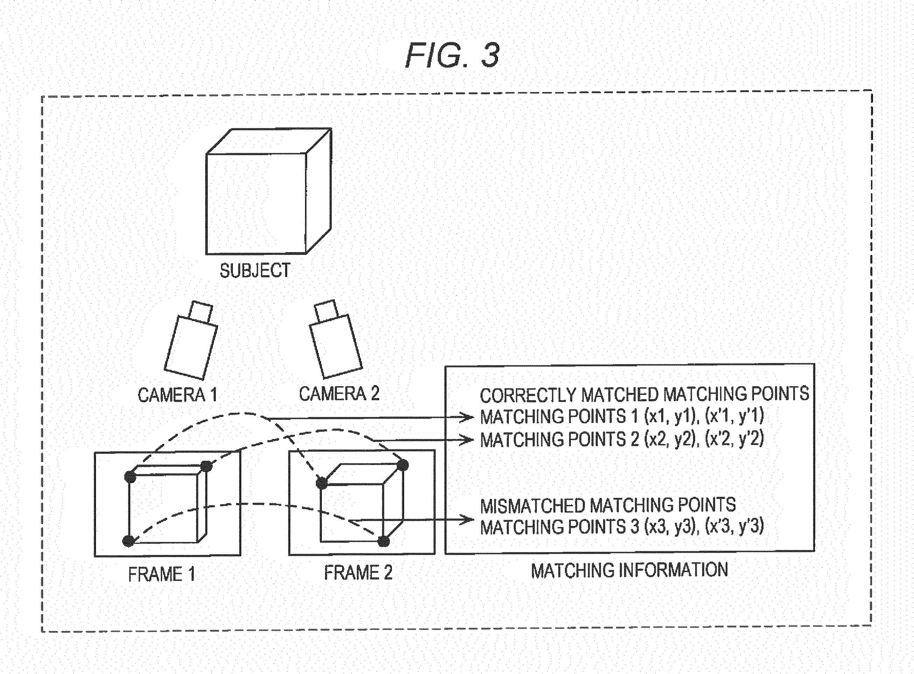

Matching information 123 will be described with reference to FIG. 3. FIG. 3 illustrates an example where a cube, which is a subject, is captured by two cameras. Matching information 123 for frame 1 in a video captured by camera 1 and frame 2 in a video captured by camera 2 includes coordinates of all the matching points of the two frames in each frame. Matching information 123 possibly includes mismatched matching points such as matching points 3, in addition to correctly matched matching points such as matching points 1 and matching points 2.

When calculated matching information 123 is received, matching information corrector 234 randomly extracts eight points from matching points included in matching information 123, and determines 3x3 fundamental matrix F in such a way that the extracted eight matching points satisfy the following Equation 1.

[Math. 1]

$$x_{2i}^T F x_{1i} = 0 \quad (i = 1 \sim 8)$$

(Equation 1)

Here, $x_{1i}$ (i = 1 to 8) is a column vector indicating coordinates of eight matching points extracted from one of the frames, on the frame, and $x_{2i}$ is a column vector indicating coordinates of eight matching points extracted from the other frame, on the frame. Also, T is a sign indicating transposition of vector. Fundamental matrix F is a $3 \times 3$ matrix with eight degrees of freedom, and thus, by using eight or more matching points, fundamental matrix F may be calculated as a linear problem. Alternatively, fundamental matrix F may be calculated as a nonlinear problem by using seven or less matching points.

Equation 1 is called an epipolar constraint for an uncalibrated camera, and by using the epipolar constraint for an uncalibrated camera, accurate fundamental matrix F may be calculated from eight points which are correctly matched. With accurate fundamental matrix F, Equation 1 is established also by points, other than the eight points, which are correctly matched. However, if Equation 1 is applied to a mismatched matching point, an evaluation value which is a calculation result of the left side of Equation 1 becomes greater than zero. A matching point is indicated to be matched with more correctness as the evaluation value is closer to zero.

Accordingly, matching information corrector 234 may detect a mismatched point from matching points by using the epipolar constraint and assuming that a matching point for which the evaluation value takes a value that is equal to or greater than a predetermined threshold to be a mismatched point. The threshold may be a predetermined fixed value, or may be variable according to the resolution, the image size, desired accuracy, or restricted processing time, or according to setting by a user.

However, if there is a mismatched point in the eight matching points to be used at the time of calculation of fundamental matrix F, accurate fundamental matrix F cannot be calculated. Accordingly, the matching information corrector 234 performs the process of calculating fundamental matrix F and detecting a mismatched point a predetermined number of times. Matching information corrector 234 determines fundamental matrix F with the smallest number of mismatched points to be accurate fundamental matrix F, and performs again detection of mismatched points in the matching points by using fundamental matrix F. Then, matching information corrector 234 corrects the matching information by removing points which are assumed to be mismatched points from the matching information. The number of times of calculating fundamental matrix F and detecting a mismatched point may be fixed, or may be variable according to the property of the video or setting by a user.

As described above, matching information corrector 234 corrects matching information 123 as necessary by using epipolar geometry, and outputs corrected matching information 124 and fundamental matrix F. Note that matching information corrector 234 may use an absolute value of a value $Hx_1-x_2$ that uses 3x3 homography matrix H, instead of epipolar geometry, and may assume a matching point for which the evaluation value takes a value equal to or smaller than a predetermined threshold to be a mismatched point and correct matching information 123 by removing a point which is assumed to be a mismatched point. This threshold may also be fixed, or may be variable according to the property of the video or setting by a user. Also, matching information corrector 234 may correct matching information 123 by determining a vector $x_1-x_2$ for every two matching points, and by assuming a matching point for which the direction or the size of the vector is different from other vectors by a predetermined value or more to be a mismatched point.

Synchronization information acquirer 222 includes three-dimensional reconstructor 241, candidate synchronization frame extractor 242, and synchronization frame determiner 243. When matching information 124 and fundamental matrix F output from matching information corrector 234 are received, three-dimensional reconstructor 241 first determines, by Equation 2, essential matrix E between two frames obtained from different videos using fundamental matrix F.

[Math. 2]

$$E = K_2^{-T} F K_1^{-1}$$

(Equation 2)

Here, $K_1$ and $K_2$ are intrinsic matrices of cameras indicating parameter values such as focal lengths of two cameras corresponding to two frames, center positions of two-dimensional coordinates in the frames, and the like. Also, $M^{-1}$ indicates an inverse matrix of matrix M. intrinsic matrices $K_1$ and $K_2$ of the cameras are set before capturing of the videos, and video synchronization apparatus 200 acquires intrinsic matrices $K_1$ and $K_2$ from cameras 100. Alternatively, three-dimensional reconstructor 241 may estimate intrinsic matrices $K_1$ and $K_2$ from the videos. As indicated by Equation 3, essential matrix E may be decomposed into rotation matrix R and translation vector T. Rotation matrix R indicates directions of the two cameras, and translation vector T indicates positions of the two cameras.

[Math. 3]

$$E = T \times R$$

(Equation 3)

Three-dimensional reconstructor 241 calculates rotation matrix R and translation vector T from essential matrix E, and calculates coordinates of a matching point in a three-dimensional space by the principle of triangulation using rotation matrix R and translation vector T.

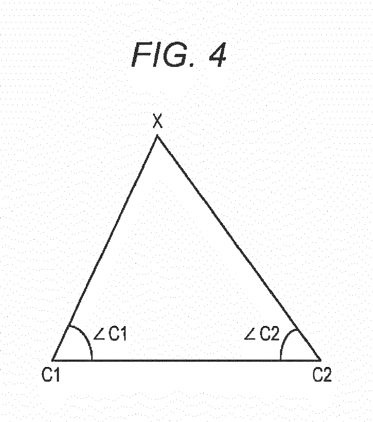

The principle of triangulation will be briefly described with reference to FIG. 4. FIG. 4 illustrates coordinates X of a matching point in a three-dimensional space, coordinates C1 of a center of one camera in the three-dimensional space, and coordinates C2 of a center of another camera in the three-dimensional space.

If a distance of base C1C2 of triangle XC1C2 and angles of two corners ∠C1 and LC2 at the ends of the base are known, positions of vertices can be measured. Here, to determine translation vector T is to determine the distance of base C1C2 and vectors indicating directions. To determine rotation matrix R is to determine the angles of two corners LC1 and LC2 and their orientations. Three-dimensional reconstructor 241 estimates the coordinates in the three-dimensional space for all the matching points, and outputs estimated information 125.

A matching point herein is a point which is included in matching information 124 which has been corrected as necessary by matching information corrector 234.

For example, estimated information 125 is a number of three-dimensional restore points, a total reprojection error, or an average reprojection error. The number of three-dimensional restore points is a number of matching points for which coordinates in the three-dimensional space are calculated based on the principle of triangulation. Also, a reprojection error indicates a distance between coordinates, in a two-dimensional frame, of an estimated three-dimensional restore point projected on the frame and coordinates of a matching point in an original frame. Reprojection errors are added for each matching point to determine the total reprojection error, and are averaged to determine the average reprojection error. Note that, in a case where a matching point is not correct, the three-dimensional restore point is not calculated, or the total reprojection error or the average reprojection error becomes great.

Note that, at the time of estimating coordinates of a matching point in a three-dimensional space, three-dimensional reconstructor 241 may estimate the coordinates in the three-dimensional space for all the matching points, determine the reprojection error for each three-dimensional restore point, and exclude a three-dimensional restore point for which the reprojection error is equal to or greater than a predetermined value. That is, three-dimensional reconstructor 241 may calculate the number of three-dimensional restore points, the total reprojection error, or the average reprojection error for a three-dimensional restore point for which the reprojection error is less than the predetermined value, and output estimated information 125 indicating the calculation result.

Furthermore, three-dimensional reconstructor 241 outputs camera information 114 including the positions of the cameras and the orientations of the cameras calculated by the processing described above.

Candidate synchronization frame extractor 242 extracts candidate synchronization frames 126 based on received estimated information 125. In the case where the number of three-dimensional restore points is used as estimated information 125, candidate synchronization frame extractor 242 extracts, as candidate synchronization frames 126, a pair of frames with a predetermined or greater number of three-dimensional restore frames, based on an assumption that a pair of frames with a great number of three-dimensional restore points are highly likely to be synchronous frames. The predetermined value as a threshold may be a fixed number determined in advance, or a variable number that is changed according to the property of an image such as the size or the quality, or according to setting by a user. Also, in the case where the total reprojection error or an average reprojection error is used as estimated information 125, candidate synchronization frame extractor 242 extracts, as candidate synchronization frames, a pair of frames for which the reprojection error is equal to or smaller than a predetermined value, based on an assumption that a pair of frames with a small total reprojection error or average reprojection error are highly likely to be synchronous frames. This predetermined value may also be set to be constant, or be arbitrarily set.

Note that candidate synchronization frame extractor 242 may alternatively use the number of three-dimensional restore points and the total reprojection error or the average reprojection error as estimated information 125. For example, candidate synchronization frame extractor 242 may extract, as candidate synchronization frames, a pair of frames with a predetermined or greater number of three-dimensional restore points and for which the total reprojection error or the average reprojection error is equal to or smaller than a predetermined value.

Synchronization frame determiner 243 determines synchronization frames from candidate synchronization frames 126 which have been extracted, and outputs the determination result as synchronization information 113, in association with a plurality of videos 112. A specific determination method will be described below.

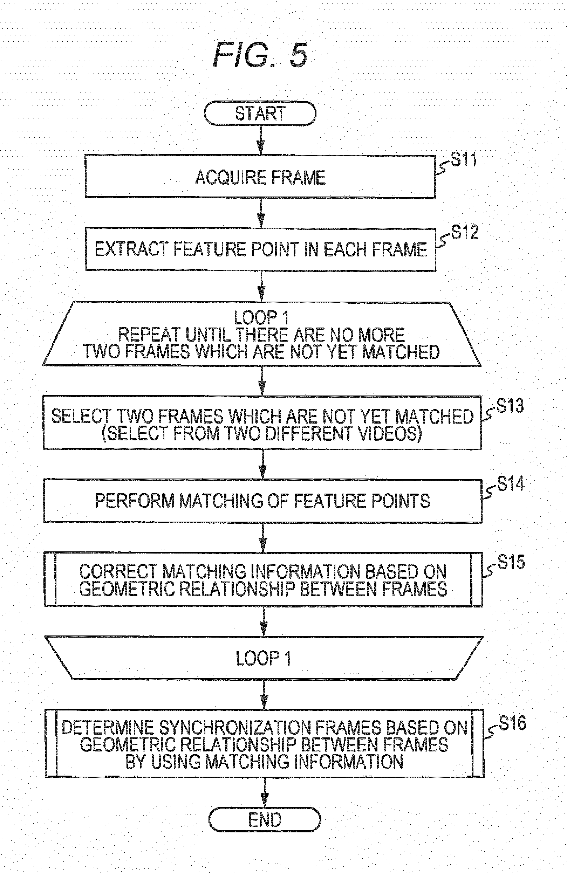

Next, an example processing flow of synchronization processor 220 will be described with reference to FIGS. 5, 6, and 7. in the following, a case will be described where videos V1', V2', V3' are input to inputter 210 from three cameras C1, C2, C3, and videos V1, V2, V3 which have been divided into specific sections are input to synchronization processor 220 after preprocessing such as adjustment of video brightness and noise removal.

FIG. 5 illustrates an example processing flow of synchronization processor 220. First, frame acquirer 231 decomposes each of videos V1, V2, V3 into frames (step S11). For example, videos V1, V2, V3 are assumed to be decomposed into five frames V1_1 to V1_5, V2_1 to V2_5, V3_1 to V3_5, respectively.

Next, feature point detector 232 detects a feature point in each frame, and extracts feature point information 122 (step S12). Feature point matcher 233 selects two frames which are frames belonging to different videos and which are not yet subjected to matching processing (step S13). For example, frames V1_1 and V1_2 are two frames from the same video, and this combination is not selected, whereas frames V1_1 and V2_1 are two frames from different videos, and this combination is a selection candidate.

Next, feature point matcher 233 detects matching points by comparing feature point information 122 of selected two frames, and generates matching information 123 indicating the matching points (step S14). Then, matching information corrector 234 corrects matching information 123 based on the geometric relationship between the frames (step S15). Steps S13 to S15 are repeated by a number of combination patterns of two frames belonging to different videos.

Next, synchronization information acquirer 222 determines synchronization frames based on the geometric relationship between frames by using corrected matching information 124 (step S16).

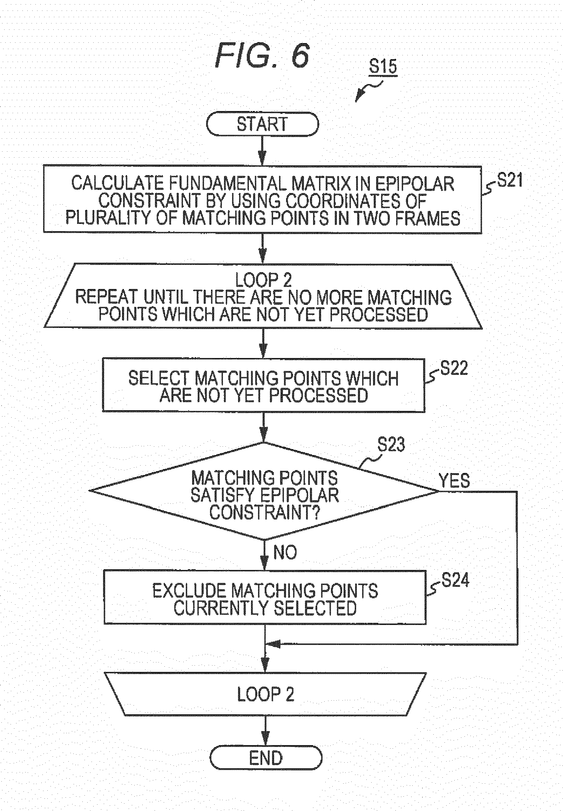

FIG. 6 illustrates an example flow of matching information correction processing (FIG. 5, step S15) by matching information corrector 234.

First, matching information corrector 234 calculates fundamental matrix F between matching points in two frames, from coordinates of a plurality of matching points indicated by matching information 123 (step S21). Next, matching information corrector 234 selects matching points which are not yet processed (step S22). Matching information corrector 234 determines whether the selected matching points satisfy the epipolar constraint, which is a geometric relationship between frames (step S23). Specifically, matching information corrector 234 determines whether the value of the right side of the epipolar constraint equation (epipolar constraint) indicated by Equation 1 is equal to or greater than a predetermined value. In the case where the value of the right side of Equation 1 is equal to or greater than a predetermined value (step S23: Yes), matching information corrector 234 corrects matching information 123 by removing the matching points that are currently selected from matching information 123 (step S24). Steps S22 to S24 are repeated by the number of matching points.

By removing, by the processing described above, matching points, among the detected matching points, which are considered to be mismatched due to the coordinate position relationship not conforming to epipolar geometry, the accuracy of frame selection can be increased.

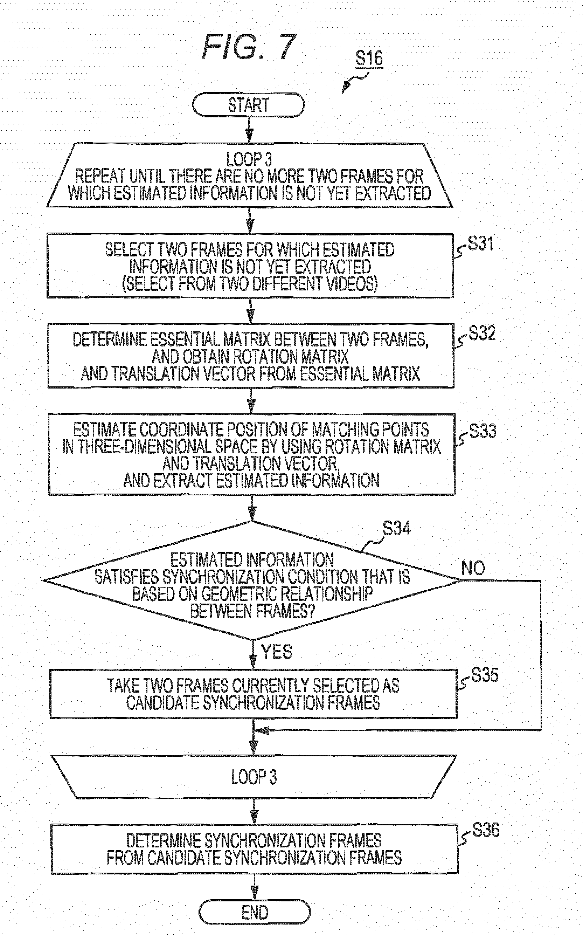

FIG. 7 illustrates an example flow according to a comparative example not covered by the claims of synchronization frame determination processing (FIG. 5, step S16) by synchronization information acquirer 222. Three-dimensional reconstructor 241 selects two frames which are frames belonging to different videos and for which estimated information 125 is not extracted (step S31). Subsequently, three-dimensional reconstructor 241 determines essential matrix E between the two frames by using fundamental matrix F and corrected matching information 124 for the selected two frames, and obtains rotation matrix R and translation vector T from essential matrix E (step S32).

Three-dimensional reconstructor 241 estimates the coordinates, in the three-dimensional space, of matching points included in corrected matching information 124 by using rotation matrix R and translation vector T, and extracts estimated information 125 that is obtained based on the relationship of the coordinates (step S33). For example, estimated information 125 is a three-dimensional restore point, the total reprojection error or the average reprojection error, or a combination thereof.

Candidate synchronization frame extractor 242 determines whether estimated information 125 satisfies a synchronization condition (step S34). In the case where estimated information 125 satisfies the synchronization condition (step S34: Yes), candidate synchronization frame extractor 242 determines the selected two frames as candidate synchronization frames 126 (step S35). The synchronization condition herein is that the number of three-dimensional restore points, which is estimated information 125, is equal to or greater than a predetermined value and/or that the total reprojection error or the average reprojection error is equal to or smaller than a predetermined value. Next, synchronization frame determiner 243 determines synchronization frames from candidate synchronization frames 126 (step S36). Steps S31 to S35 are repeated by a number of combination patterns of two frames belonging to different videos.

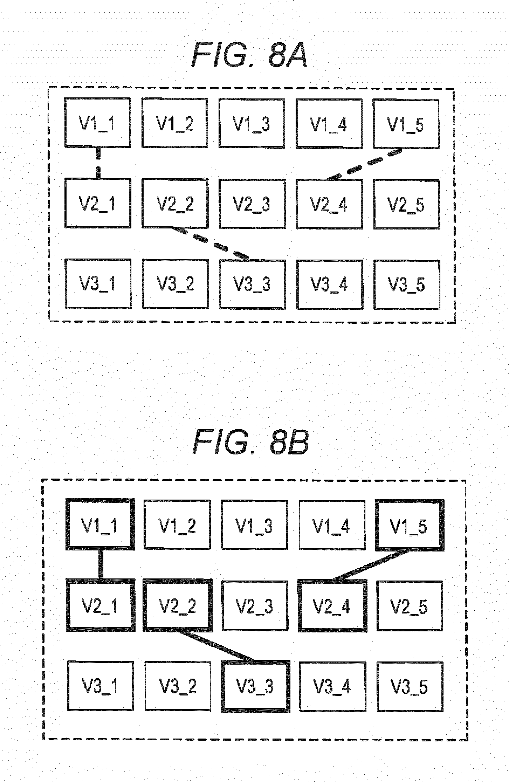

A synchronization frame determination method of synchronization frame determiner 243 will be described with reference to FIGS. 8A to 10B. Fifteen rectangles in FIGS. 8A to 10B indicate fifteen frames V1_1 to V1_5, V2_1 to V2_5, and V3_1 to V3_5. Frames that are connected by broken lines are candidate synchronization frames 126 extracted by candidate synchronization frame extractor 242. Frames that are connected by solid lines are synchronization frames determined by synchronization frame determiner 243.

As illustrated in FIG. 8A, in a case where neither of two frames selected as candidate synchronization frames is selected as a candidate synchronization frame for another frame, synchronization frame determiner 243 directly determines the candidate synchronization frames as the synchronization frames, as illustrated in FIG. 8B.

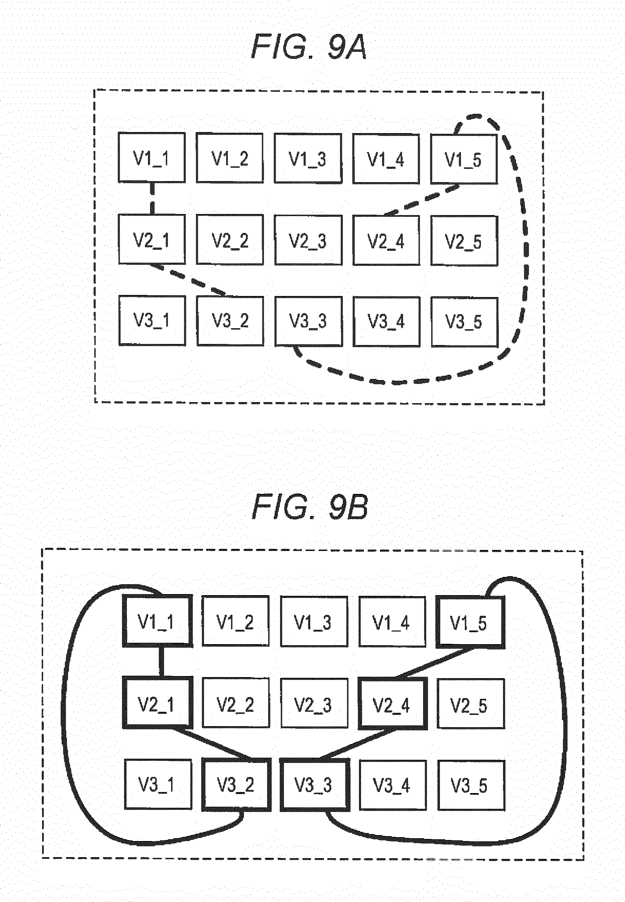

As illustrated in FIG. 9A, in the case where one of frames selected as candidate synchronization frames is selected as a candidate synchronization frame for another frame, synchronization frame determiner 243 determines all the related frames to be synchronization frames, as illustrated in FIG. 9B. For example, frames V1_1 and V2_1 are first candidate synchronization frames, and frames V2_1 and V3_2 are second candidate synchronization frames. In this case, even if frames V1_1 and V3_2 are not selected as candidate synchronization frames, three related frames V1_1, V2_1, V3_2 are determined as the synchronization frames.

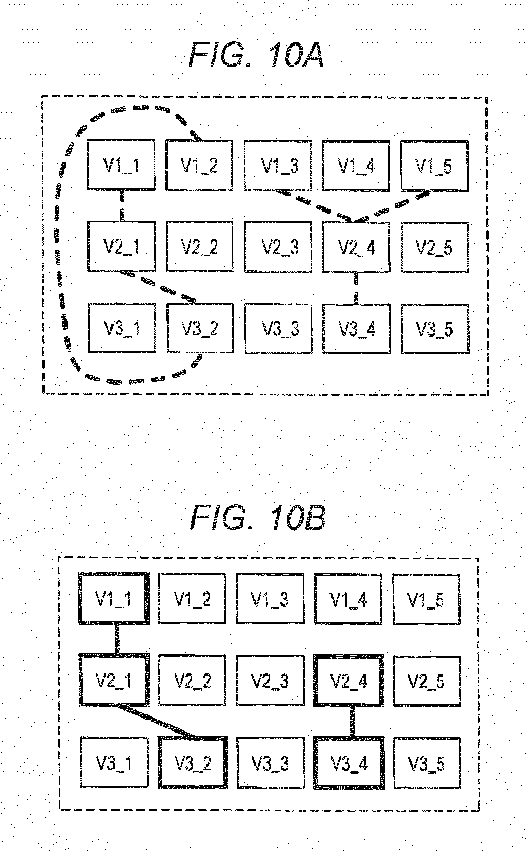

However, as illustrated in FIG. 10A, if there are three or more related frames, three being a maximum number of videos, that is, if frames belonging to the same video (for example, V1_1 and V1_2) are included as the related frames, only one of the frames belonging to the same video (for example, V1_1) is selected with respect to related frames V1_1, V1_2, V2_1, V3_2, as illustrated in FIG. 10B, and the synchronization frames are determined. Alternatively, the synchronization frames may be determined by excluding the frames belonging to the same video (for example, V1_3, V1_5), as illustrated in FIG. 10B.

Also, in a case where related frames include a plurality of frames belonging to the same video, and one of such frames is to be selected as the synchronization frame, synchronization frame determiner 243 may select a frame with a smaller total reprojection error or average reprojection error based on the relationship to each of other frames, or may select a frame with a greater number of three-dimensional restore points. Synchronization frame determiner 243 may thus select a frame for which estimated information 125 indicates a high degree of matching, based on the relationship to other related frames.

Moreover, synchronization frame determiner 243 may select a frame under a specific condition such as selecting a frame to which temporally close time information is added, simply based on the relationship to related frames belonging to other videos, for example. Also, synchronization frame determiner 243 may select frames with close camera positions. This may reduce the processing load.

The synchronization frame determination method described above is effective when considering the synchronization condition for combinations of all the frames in a specific section in a case where the frame rate of the videos is variable, that is, in a case where a series of videos include sections with different frame rates. Note that in a case where the frame rate of each video is fixed, that is, in a case where the frame rate is constant, without being changed, in a series of videos, if one pair of frames is determined as synchronization frames for two videos, interpolation can be performed with respect to other synchronization frames.

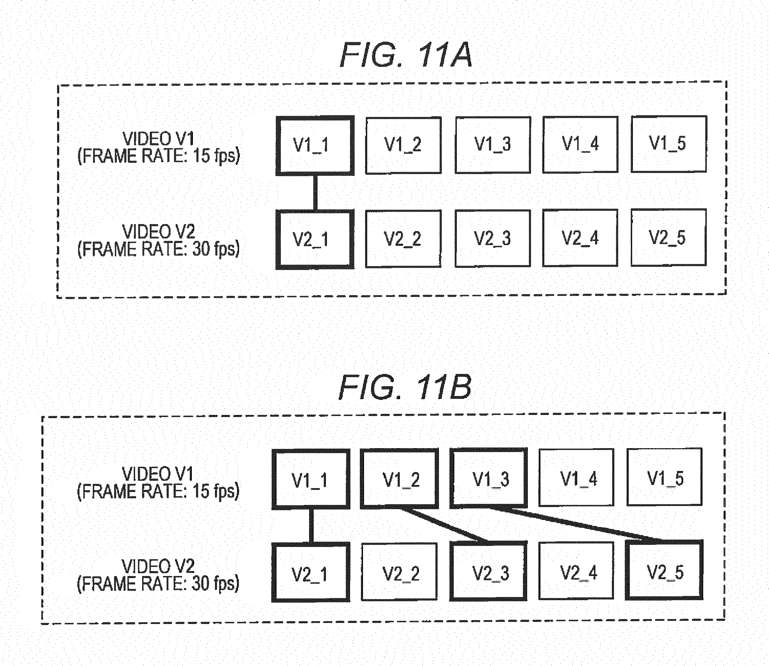

FIGS. 11A and 11B are diagrams illustrating an example of a synchronization frame interpolation method. As illustrated in FIG. 11A, it is assumed that V1_1 and V2_1 are determined by synchronization frame determiner 243 as synchronization frames. If the frame rates of videos V1 and V2 are fixed, with the frame rate of video V1 being 15 fps and the frame rate of video V2 being double that frame rate, i.e., 30 fps, synchronization frame determiner 243 can perform interpolation of synchronization frames by determining V1_2 and V2_3 as synchronization frames, and determining V1_3 and V2_5 as synchronization frames, as illustrated in FIG. 11B. That is, synchronization frame determiner 243 may take one synchronization frame as a reference, and may determine a plurality of synchronization frames according to the ratio of the frame rates of video V1 and video V2. Accordingly, the synchronization frame that is determined across two or more videos based on estimated information 125 may be limited to one.

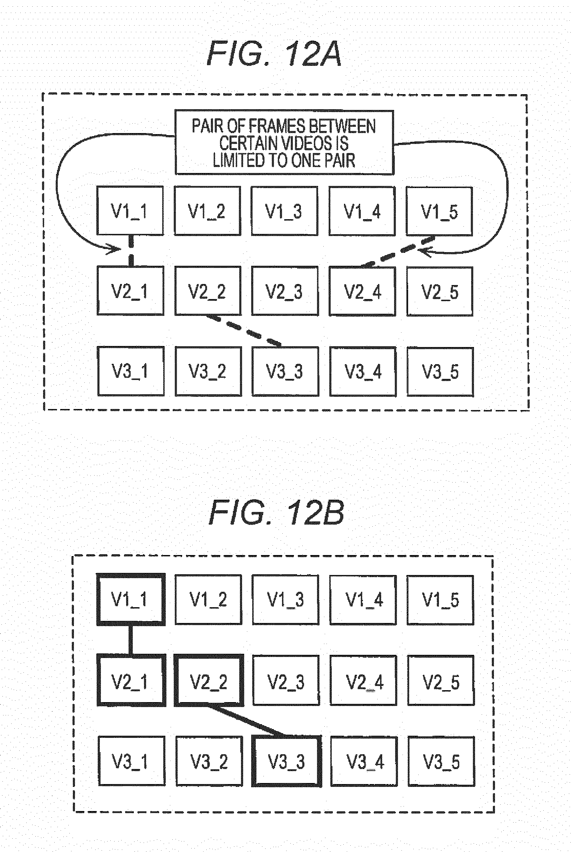

A specific example will be described with reference to FIGS. 12A and 12B. For example, in a case where the number of three-dimensional restore points which is estimated information 125 of candidate synchronization frames V1_1 and V2_1 is greater than the number of three-dimensional restore points which is estimated information 125 of candidate synchronization frames V1_5 and V2_4, synchronization frame determiner 243 selects candidate synchronization frames V1_1 and V2_1 as a pair of frames, and synchronization frames are determined while being limited to this one pair. In the same manner, in a case where the total reprojection error or the average reprojection error which is estimated information 125 of candidate synchronization frames V1_1 and V2_1 is smaller than the total reprojection error or the average reprojection error which is the estimated information of candidate synchronization frames V1_5 and V2_4, synchronization frame determiner 243 determines candidate synchronization frames V1_1 and v2_1 as synchronization frames, and does not determine V1_5 and V2_4 as synchronization frames.

As described above, if information about the frame rate is used, the synchronization processing does not have to be constantly performed for all the signal sections of video data, and if synchronization is performed in a specific section, the synchronization processing may be adaptively performed according to characteristic of the video such as the timing of a next I picture or the timing of change of the scene. Note that the synchronization processing may be regularly performed at a predetermined time interval.

As described above, according to the configuration of video synchronization apparatus 200 of the present exemplary embodiment, by using coordinates of matching points in a three-dimensional space, synchronization frames may be determined while suppressing influence of mismatching, and the accuracy of video synchronization may be increased. Also, because a frame which is to be synchronized and which belongs to another video is detected on a per-frame basis, synchronization information may be added to a plurality of videos with variable frame rates. An example is described above for a case of performing a process of previously specifying a specific section and selecting synchronization candidates for all the frames belonging to the section, but the number of frames to be considered at the time of selection of candidates may be limited by using time information added to the videos.

SECOND EXEMPLARY EMBODIMENT

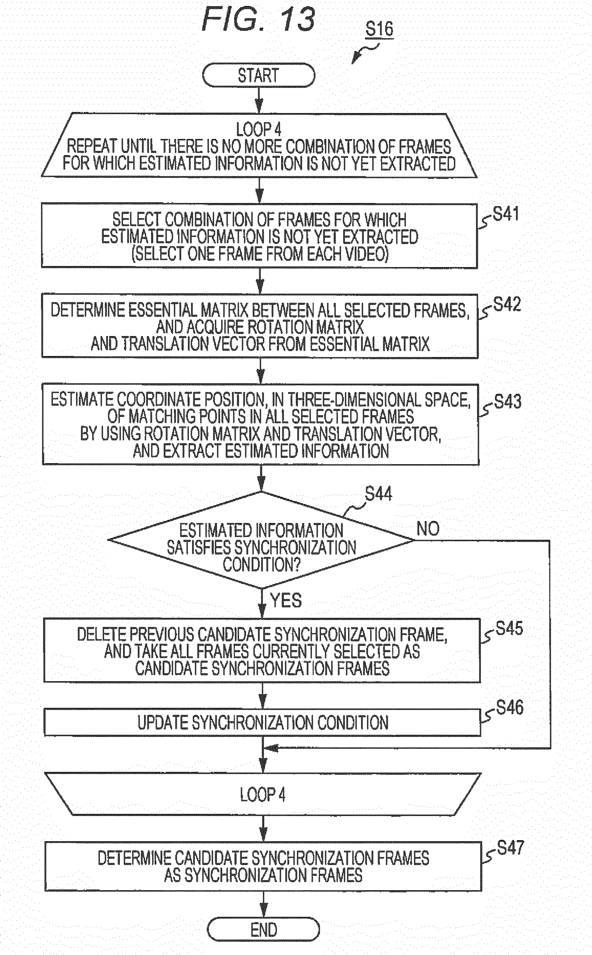

Next, a second exemplary embodiment regarding output of synchronization information from synchronization processor 220 will be described. FIG. 13 illustrates a flow of synchronization frame determination processing (FIG. 5, S16) by synchronization information acquirer 222 according to the present exemplary embodiment. The exemplary flow of Fig. 13 is a comparative example not covered by the claims but useful for understanding the claimed invention. The flow for feature quantity extractor 221 is the same as the processing flow from S11 to S15 in the first exemplary embodiment illustrated in FIG. 5. Accordingly, in the following, a processing flow, from S41 to S46, of synchronization information acquirer 222 will be described.

In steps S41 to S46, instead of determining coordinates, in a three-dimensional space, of matching points for two frames belonging to different videos, as in steps S31 to S36 in FIG. 7, synchronization information acquirer 222 selects one frame from each video, and determines coordinates of matching points in a three-dimensional space by using three or more frames.

First, three-dimensional reconstructor 241 selects a combination of frames for which estimated information is not yet extracted (step S41). At this time, one frame is selected from each video for the combination of frames.

Subsequently, three-dimensional reconstructor 241 determines essential matrix E between frames for all the selected frames, by using corrected matching information 124 and fundamental matrix F obtained from matching information corrector 234, and obtains rotation matrix R and translation vector T from each essential matrix E (step S42).

When rotation matrix R and translation vector T are obtained for between all the selected frames, three-dimensional reconstructor 241 estimates coordinates of matching points included in matching information 124 in a three-dimensional space by the principle of triangulation using all the selected frames, and extracts estimated information 125 such as the three-dimensional restore point, the total reprojection error or the average reprojection error (step S43). Coordinates of matching points in the three-dimensional space estimated in this step are estimated using three or more frames, and thus, the coordinates are more accurate than the coordinates of matching points in a three-dimensional space estimated using two frames, as in the first exemplary embodiment.

Candidate synchronization frame extractor 242 determines whether estimated information 125 satisfies a synchronization condition (step S44). In the case where estimated information 125 satisfies the synchronization condition (step S44: Yes), candidate synchronization frame extractor 242 deletes previous candidate synchronization frames and determines all the currently selected frames to be new candidate synchronization frames (step S45), and updates the synchronization condition (step S46).

As in the first exemplary embodiment, a synchronization condition is that the number of three-dimensional restore points, as estimated information 125, is equal to or greater than a specific value, or that the total reprojection error or the average reprojection error is equal to or smaller than a specific value, for example.

Update of the synchronization condition is to replace a specific value to be used for the synchronization condition by estimated information 125. For example, in the case of a synchronization condition that the average reprojection error is 1.2 or smaller, if the average reprojection errors calculated using currently selected frames are 0.9, the currently selected frames satisfy the synchronization condition, and thus, these currently selected frames are determined as candidate synchronization frames, and the synchronization condition is updated to a condition that the average reprojection error is 0.9 or smaller.

Steps S41 to S46 are performed by acquiring one frame from each video, and are repeated by a number of times obtained by multiplying the number of frames and the number of videos. By repeating steps S41 to S46 for all the combinations, in the case of using the number of three-dimensional restore points as estimated information 125, a combination of frames with the greatest number of three-dimensional restore points are determined as the candidates for synchronization frames. Also, in the case of using the total reprojection error or the average reprojection error as estimated information 125, a combination of frames with the smallest total reprojection error or average reprojection error are determined as the candidates for synchronization frames.

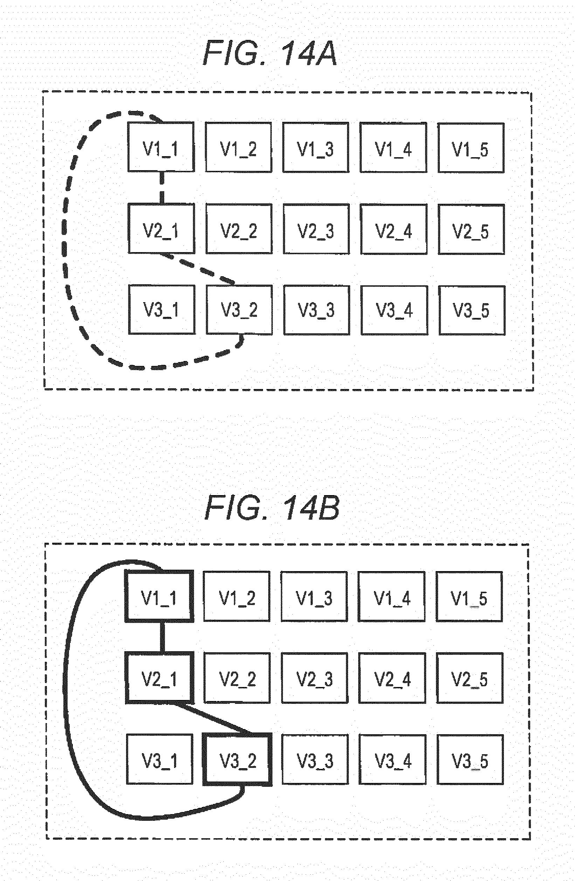

As illustrated in FIGS. 14A and 14B, one combination is determined as the candidate synchronization frames, and thus, synchronization frame determiner 243 determines the candidate synchronization frames as the synchronization frames (step S47). Note that, in the present exemplary embodiment, candidates for synchronization frames are determined by repeating steps S41 to S46 by the number of combinations, but search for candidate synchronization frames may be ended at a time point of satisfaction of a specific condition by the number of three-dimensional restore points, the total reprojection error, or the average reprojection error, which are estimated information 125. For example, by taking a combination of frames for which the number of three-dimensional restore points, which is estimated information 125 of the combination of frames, reached or exceeded a predetermined number as the candidate synchronization frames and ending the search, synchronization frames may be determined while suppressing the processing amount. Moreover, by taking a combination of frames for which the total reprojection error or the average reprojection error, which is the estimated information of the combination of frames, has reached or fell below a predetermined number as the candidate synchronization frames and ending the search, synchronization frames may be determined while suppressing the processing amount.

As described above, according to the present exemplary embodiment, because one frame is acquired from each video, and three-dimensional coordinates of matching points are estimated by using all the acquired frames, coordinates of matching points in a three-dimensional space may be estimated with higher accuracy compared with three-dimensional coordinate estimation using two frames. Moreover, estimated information 125 may be extracted based on the highly accurate coordinates of the matching points in the three-dimensional space. As a result, the accuracy of video synchronization may be increased. Also, because one combination is determined as the candidate synchronization frames, synchronization frames may be determined with a smaller processing amount than in the first exemplary embodiment. The second exemplary embodiment is particularly effective when videos are captured at similar times and the frame rate is fixed for all the videos.

Note that, in both the first and second exemplary embodiments, coordinates of corrected matching points in a three-dimensional space are estimated, and estimated information 125 is input to candidate synchronization frame extractor 242, but instead, corrected matching information 124 that is obtained from matching information corrector 234 may be input to candidate synchronization frame extractor 242 as estimated information 125. Matching points not conforming to epipolar geometry are roughly removed from corrected matching information 124 in step S15 by using fundamental matrix F, and thus, the accuracy is higher compared with a conventional synchronization method by simple matching, and also, synchronization processing may be implemented with a smaller amount of processing than in the first and second exemplary embodiments.

That is, processing that is the same as conventional processing may be performed on corrected matching information 124 in step S16 in FIG. 5. For example, candidate synchronization frame extractor 242 may determine frames with many matching points, or frames with small squared error or absolute error with respect to the matching points as the synchronization frames.

As described above, video synchronization apparatus 200 according to the first and second exemplary embodiments includes a processor, and a storage connected to the processor. The processor performs a detection step (FIG. 5, S12) of detecting a first feature point in a first image frame in a first video, and a second feature point in each of a plurality of second image frames in a second video, an extraction step (FIG. 5, S14) of extracting matching points that are a set of the first feature point and a second feature point that is similar to the first feature point, and a synchronization step (FIG. 5, S15 and S16) of determining a second image frame to be synchronized with the first image frame, based on a first degree of satisfaction, by a matching point in each second image frame, of a first geometric relationship between the each second image frame and the first image frame. The synchronization step herein that uses the first geometric relationship includes the matching information correction processing (FIG. 5, step S15) and the synchronization frame determination processing (FIG. 5, step S16) described above.

Video synchronization apparatus 200 may thereby implement highly accurate video synchronization processing in order to determine synchronization frames while taking into account the positional relationship between matching points in a three-dimensional space.

According to the invention, the matching information correction processing (FIG. 5, step S15) described above is performed in the synchronization step. That is, in the extraction step, a plurality of matching points are extracted from each of a plurality of second image frames. Also, as illustrated in FIG. 6, the synchronization step (S15) includes a removal step (S23, S24) of calculating, for each of the plurality of second image frames, the first degree of satisfaction of the first geometric relationship by each of the plurality of matching points, and removing, from the plurality of matching points, a matching point for which the calculated first degree is lower than a threshold, and a determination step (S16) of determining a second image frame to be synchronized with the first image frame, among the plurality of second image frames, based on a matching point after the removing obtained for each of the plurality of second image frames.

Video synchronization apparatus 200 may thereby implement highly accurate video synchronization processing in order to determine synchronization frames by using matching points after removal of mismatched points not satisfying the geometric relationship.

Specifically, the synchronization step (S15) further includes a calculation step (S21) of calculating the first geometric relationship for each of the plurality of second image frames by using at least one of the plurality of matching points. In the removal step (S23), the first degree of satisfaction of the calculated first geometric relationship by each of the matching points is calculated.

For example, the first geometric relationship is epipolar constraint, and fundamental matrix F in epipolar constraint is calculated in the calculation step (S21) by using at least one of a plurality of matching points. In the removal step (S23), the first degree of satisfaction of epipolar constraint by each of the matching points is calculated by using fundamental matrix F. Specifically, the value of the right side of Equation 1 is calculated as the first degree.

According to the present invention, in the determination step (S16), a second image frame for which a number of matching points after removal is greater than a threshold is determined as a second image frame to be synchronized with the first image frame.

According to an alternative comparative example not covered by the claims, the synchronization frame determination processing (FIG. 5, step S16) described above may be performed in the synchronization step. That is, as illustrated in FIG. 7, the synchronization step (S16) includes a step (S33) of calculating a three-dimensional restore point indicating three-dimensional coordinates of each of the matching points, a step (S34) of calculating the first degree (estimated information 125) of satisfaction of the first geometric relationship based on the calculated three-dimensional restore point, and a determination step (S34, S35) of determining a second image frame for which the calculated first degree is high, among the plurality of second image frames, as a second image frame to be synchronized with the first image frame. For example, a second image frame with the highest first degree or for which the first degree is equal to or greater than a threshold is selected.

Video synchronization apparatus 200 thereby determines synchronization frames based on the three-dimensional coordinates of matching points. Mismatched points for which three-dimensional coordinates cannot be calculated or for which inappropriate three-dimensional coordinates are calculated may thereby be removed, and highly accurate video synchronization processing can be implemented.

Furthermore, the first degree (estimated information 125) may be a number of calculated three-dimensional restore points, and in the determination step (S34), a second image frame for which the number of the calculated three-dimensional restore points is great, among the plurality of second image frames, may be determined as a second image frame to be synchronized with the first image frame. For example, a second image frame with the greatest number of three-dimensional restore points or for which the number of three-dimensional restore points is equal to or greater than a threshold is selected.

Alternatively, still in the comparative example, the first degree may be reprojection errors indicating differences between projected points of the three-dimensional restore points projected on the first image frame and the second image frame and the first feature point and the second feature point, and in the determination step (S34), a second image frame for which a calculated reprojection error is small, among the plurality of second image frames, may be determined as a second image frame to be synchronized with the first image frame. For example, a second image frame with the smallest reprojection error or for which the reprojection error is equal to or smaller than a threshold is selected.

Moreover, in the comparative example camera information 114 estimated by three-dimensional reconstructor 241 may be added to output of synchronization processor 220. That is, in the step of calculating a three-dimensional restore point (S32, S33), a capturing position and a capturing direction (camera information 114) are calculated for the first video and the second video, and the three-dimensional restore is calculated by using the calculated capturing position and capturing direction. Specifically, fundamental matrix E is calculated from fundamental matrix F by Equation 2, and rotation matrix R and translation vector T (capturing position and capturing direction) are calculated from fundamental matrix E. The processor further outputs camera information 114 including the calculated capturing position and capturing direction. Synchronized reproduction using the capturing position and the capturing direction may thereby be implemented.

Also, in the detection step (S12), the first feature point and the second feature point may be detected based on at least one of a contour of a subject, a luminance difference, and a color difference.

Moreover, as described in the second exemplary embodiment, one frame may be selected from each video, and coordinates of matching points in a three-dimensional space may be determined by using three or more frames. That is, in the detection step (S12), a third feature point in each of a plurality of third image frames in a third video is further detected, and in the extraction step (S14), a set of the first feature point and a third feature point that is similar to the first feature point, and a set of the second feature point and a third feature point that is similar to the second feature point are further extracted as the matching points. In the synchronization step (S16), the first degree (estimated information 125) may be calculated for each of combinations each including one first image frame, one second image frame, and one third image frame (FIG. 13, S41 to S44), and a first image frame, a second image frame, and a third image frame included in a combination for which the calculated first degree is high, among the plurality of combinations, may be synchronized (S44 to 46). For example, a combination with the highest first degree or for which the first degree is equal to or greater than a threshold is selected.

Accordingly, video synchronization apparatus 200 may calculate the first degree for each combination including one image frame selected from each of a plurality of videos, and may determine synchronization frames on a per-combination basis. Therefore, the amount of processing may be reduced in a case of determining only one synchronization frame between videos.

Furthermore, each processor included in the video synchronization apparatus according to the above-described exemplary embodiments is typically realized as an LSI, which is an integrated circuit. These processors may be integrated individually into one chip, or may be integrated into one chip so as to include a part or all of the processors.

Moreover, circuit integration is not limited to LSI but may be implemented using dedicated circuitry or a general-purpose processor. A field programmable gate array (FPGA) which is programmable after manufacture of an LSI, or a reconfigurable processor in which connections or settings of circuit cells within the LSI are reconfigurable may be used.

In the above-described exemplary embodiments, each component may be formed with dedicated hardware, or may be implemented by execution of a software program suitable for each component. Each component may be implemented by a program executer such as a CPU or a processor that reads and executes the software program recorded in a recording medium such as a hard disk or a semiconductor memory.

In other words, the video synchronization apparatus includes processing circuitry and a storage (accessible from the processing circuitry) electrically connected to the processing circuitry. The processing circuitry includes at least one of the dedicated hardware and the program executer. Moreover, when the processing circuitry includes the program executer, the storage stores the software program to be executed by the program executer. The processing circuitry uses the storage to execute the video synchronization method according to the above-described exemplary embodiments.

Further, the present disclosure may be the above-described software program, and may be a non-transitory computer-readable recording medium storing the above-described program thereon. Moreover, it is needless to say that the program can be distributed via a transmission medium such as the Internet.

Moreover, all numerals used above are examples used for specifically describing the present disclosure, and the present disclosure is not limited to those numerals.

Moreover, the order of executing the steps included in the above-described video synchronization method is an example used for specifically describing the present disclosure, and may be an order other than the above-described order. Moreover, some of the above-described steps may be executed simultaneously (in parallel) with another step.

The video synchronization method and the video synchronization apparatus according to one or more aspects of the present disclosure have been described above based on the exemplary embodiments; however, the present disclosure is not limited to these exemplary embodiments. Various variations conceivable by a person skilled in the art may be applied to the present exemplary embodiments, and components of different exemplary embodiments may also be combined within the scope of the one or more aspects of the present disclosure as long as such variations and combination do not depart from the gist of the present disclosure.

THIRD EXEMPLARY EMBODIMENT

Other application examples of the configurations of the image processing method and apparatus described in each exemplary embodiment described above and a system using the application examples will be described. The system is applicable to an increasingly intelligent video system with object space extending to a wider area. For example, the system is applicable to (1) a monitoring system mounted in a security camera of a store or a factory, a vehicle-mounted camera of the police or the like, (2) a transportation information system using a camera owned by an individual person, each vehicle-mounted camera, a camera installed in a road or the like, (3) an environmental research or delivery system using a remote-controllable or auto-controllable apparatus such as a drone, and (4) a content transmission and reception system of a video or the like using a camera installed in an entertainment facility, a stadium or the like, a moving camera such as a drone, a camera owned by an individual person or the like.

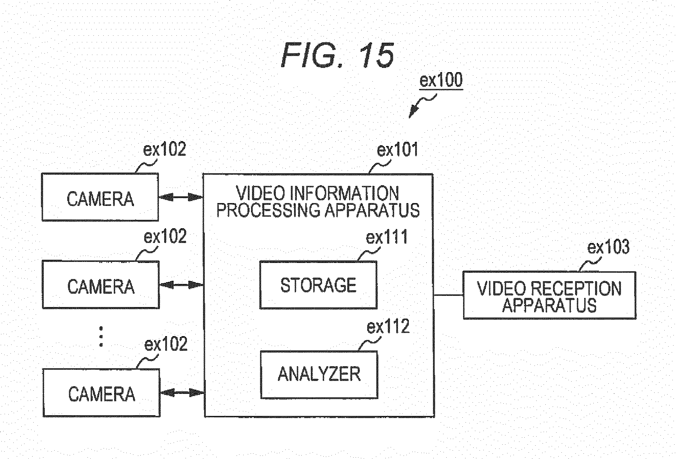

FIG. 15 is a diagram illustrating a configuration of video information processing system ex100 according to the present exemplary embodiment. The present exemplary embodiment describes an example of preventing occurrence of a dead angle and an example of prohibiting capturing of a specific area.

Video information processing system ex100 illustrated in FIG. 15 includes video information processing apparatus ex101, a plurality of cameras ex102, and video reception apparatus ex103. Note that video information processing system ex100 does not necessarily need to include video reception apparatus ex103.

Video information processing apparatus ex101 includes storage ex111 and analyzer ex112. Each of N cameras ex102 has a function of capturing videos and a function of transmitting captured video data to video information processing apparatus ex101. Moreover, camera ex102 may have a function of displaying a video that is being captured. Note that camera ex102 may code a captured video signal by using a coding scheme such as HEVC or H.264, and may then transmit the coded video signal to video information processing apparatus ex101, or camera ex102 may transmit the video data that is not coded to video information processing apparatus ex101.

Here, each camera ex102 is a fixed camera such as a monitoring camera, a moving camera mounted in a radio-controlled unmanned flight vehicle, a vehicle or the like, or a user camera owned by a user.

The moving camera receives an instruction signal transmitted from video information processing apparatus ex101, and changes a position or capturing direction of the moving camera itself in response to the received instruction signal.

Moreover, time of the plurality of cameras ex102 is calibrated by using time information of a server or a reference camera prior to start of capturing. Moreover, spatial positions of the plurality of cameras ex102 are calibrated based on how an object in space to be captured is captured or a relative position from a reference camera.

Storage ex111 in information processing apparatus ex101 stores the video data transmitted from N cameras ex102.

Analyzer ex112 detects a dead angle from the video data stored in storage ex111, and transmits to the moving camera the instruction signal that indicates an instruction to the moving camera for preventing occurrence of a dead angle. The moving camera moves in response to the instruction signal, and continues capturing.

Analyzer ex112 detects a dead angle by using Structure from Motion (SfM), for example. SfM is a technique of restoring a three-dimensional shape of a subject from a plurality of videos captured from different positions, and SfM is widely known as a shape restoration technology of estimating a subject shape and a camera position simultaneously. For example, analyzer ex112 restores the three-dimensional shape in the facility or in the stadium from the video data stored in storage ex111 by using SfM, and detects as a dead angle an area that cannot be restored.

Note that when the position and capturing direction of camera ex102 are fixed and information of the position and capturing direction is known, analyzer ex112 may perform SfM by using these pieces of known information. Moreover, when the position and capturing direction of the moving camera can be acquired with, for example, a GPS and angle sensor in the moving camera, the moving camera may transmit information of the position and capturing direction of the moving camera to analyzer ex112, and analyzer ex112 may perform SfM by using the transmitted information of the position and the capturing direction.

Note that a method for detecting a dead angle is not limited to the above-described method using SfM. For example, analyzer ex112 may use information from a depth sensor such as a laser range finder, to know a spatial distance of the object to be captured. Moreover, when an image includes a marker that is set in space in advance or a specific object, analyzer ex112 may detect information of the camera position, capturing direction, and zoom magnification from the size of the marker or the object. Thus, analyzer ex112 detects a dead angle by using any method that enables detection of the capturing area of each camera. Moreover, analyzer ex112 may acquire, for example, information of a mutual positional relationship between a plurality of objects to be captured, from video data or a proximity sensor, and analyzer ex112 may identify an area where a dead angle is highly likely to occur, based on the acquired positional relationship.

Here, the dead angle includes not only a portion having no video in an area to be captured but also a portion having poor image quality as compared to other portions, and a portion having no predetermined image quality. This portion to be detected may be set appropriately according to the configuration or purpose of the system. For example, required image quality of a specific subject in space to be captured may be set high. Moreover, conversely, the required image quality of a specific area in space to be captured may be set low, and the required image quality may be set such that the area is not determined to be a dead angle even when no video is captured.

Note that the above-described image quality includes various pieces of information regarding a video, such as area occupied by a subject to be captured in the video (for example, a number of pixels), or whether the video is focused on the subject to be captured. Based on these pieces of information or combination thereof, whether the area is a dead angle may be determined.

Note that detection of the area that is actually a dead angle is described above, but the area that needs to be detected in order to prevent occurrence of a dead angle is not limited to the area that is actually a dead angle. For example, when a plurality of objects to be captured exists and at least part of the objects is moving, a new dead angle is likely to occur because another object to be captured enters between a certain object to be captured and a camera. Meanwhile, analyzer ex112 may detect movement of the plurality of objects to be captured from, for example, the captured video data, and analyzer ex112 may estimate the area that is likely to become a new dead angle, based on the detected movement of the plurality of objects to be captured and positional information of camera ex102. in this case, video information processing apparatus ex101 may transmit the instruction signal to the moving camera to capture the area that is likely to become a dead angle, and video information processing apparatus ex101 may prevent occurrence of a dead angle.

Note that when there is a plurality of moving cameras, video information processing apparatus ex101 needs to select any of the moving cameras to which the instruction signal is to be transmitted in order to cause the moving camera to capture a dead angle or an area that is likely to become a dead angle. Moreover, when there is a plurality of moving cameras and there is a plurality of dead angles or areas that are likely to become dead angles, video information processing apparatus ex101 needs to determine which dead angle or area that is likely to become a dead angle each of the plurality of moving cameras is to capture. For example, video information processing apparatus ex101 selects the moving camera closest to a dead angle or an area that is likely to become a dead angle, based on a position of a dead angle or an area that is likely to become a dead angle, and a position of an area each moving camera is capturing. Moreover, video information processing apparatus ex101 may determine for each camera whether a new dead angle occurs when video data which the moving camera is currently capturing is not obtained, and video information processing apparatus ex101 may select the moving camera that is determined that a dead angle does not occur even when the video data which is currently being captured is not obtained.

The above-described configuration enables video information processing apparatus ex101 to prevent occurrence of a dead angle by detecting a dead angle and transmitting the instruction signal to the moving camera so as to prevent the dead angle.

VARIATION 1

Note that the example of transmitting the instruction signal for instructing the moving camera to move is described above; however, the instruction signal may be a signal for instructing the user of the user camera to move. For example, the user camera displays an instruction image that instructs the user to change the direction of the camera, based on the instruction signal. Note that the user camera may display the instruction image that indicates a movement path on a map, as the user movement instruction. Moreover, in order to improve the quality of the acquired image, the user camera may display detailed capturing instructions such as the capturing direction, an angle, an angle of view, image quality, and movement of the capturing area. Further, video information processing apparatus ex101 may automatically control such feature data of camera ex102 regarding capturing when the feature data is controllable on a video information processing apparatus ex101 side.

Here, the user camera is, for example, a smartphone, a tablet terminal, a wearable terminal, or a head mounted display (HMD) that a spectator in the stadium or a guard in the facility carries.

Moreover, a display terminal that displays the instruction image does not need to be identical to the user camera that captures video data. For example, the user camera may transmit the instruction signal or the instruction image to the display terminal associated with the user camera in advance, and the display terminal may display the instruction image. Moreover, information of the display terminal corresponding to the user camera may be registered in video information processing apparatus ex101 in advance. In this case, video information processing apparatus ex101 may cause the display terminal to display the instruction image by transmitting the instruction signal directly to the display terminal corresponding to the user camera.

VARIATION 2

Analyzer ex112 may generate a free viewpoint video (three-dimensional reconfiguration data), for example, by using SfM to restore the three-dimensional shape in the facility or in the stadium from the video data stored in storage ex111. This free viewpoint video is stored in storage ex111. Video information processing apparatus ex101 reads from storage ex111 the video data according to visual field information (and/or viewpoint information) transmitted from video reception apparatus ex103, and transmits the read video data to video reception apparatus ex103. Note that video reception apparatus ex103 may be one of the plurality of cameras.

VARIATION 3

Video information processing apparatus ex101 may detect a capturing prohibited area. In this case, analyzer ex112 analyzes the captured image, and when the moving camera is capturing the capturing prohibited area, analyzer ex112 transmits a capturing prohibition signal to the moving camera. The moving camera stops capturing while receiving the capturing prohibition signal.

For example, analyzer ex112 matches three-dimensional virtual space restored by using SfM with the captured video, and accordingly analyzer ex112 determines whether the moving camera set in advance in space is capturing the capturing prohibited area. Alternatively, analyzer ex112 determines whether the moving camera is capturing the capturing prohibited area, by using a marker or characteristic object placed in space as a trigger. The capturing prohibited area is, for example, a rest room in the facility or in the stadium.

Moreover, when the user camera is capturing the capturing prohibited area, the user camera may notify the user of a fact that the current place is a capturing prohibited place, by causing a display connected wirelessly or with wires to display a message, or by outputting a sound or voice from a speaker or an earphone.

For example, a fact that capturing in the current direction of the camera orientation is prohibited is displayed as the message. Alternatively, the capturing prohibited area and the current capturing area are indicated on a displayed map. Moreover, the capturing is automatically resumed, for example, when the capturing prohibition signal is no longer output. Moreover, the capturing may be resumed when the capturing prohibition signal is not output and the user performs operations for resuming the capturing. Moreover, when the capturing is stopped and resumed twice or more in a short period, calibration may be performed again. Moreover, notification for checking the current position or for prompting movement may be given to the user.

Moreover, in a case of special work such as the police, pass code or fingerprint authentication or the like that disables such a function may be used for recording. Further, even in such a case, when the video of the capturing prohibited area is displayed or stored outside, image processing such as mosaic may be performed automatically.

The above configuration enables video information processing apparatus ex101 to set a certain area as the capturing prohibited area by performing determination of capturing prohibition and giving the user notification for stopping capturing.

VARIATION 4

Since it is necessary to collect videos of the plurality of viewpoints in order to construct three-dimensional virtual space from the videos, video information processing system ex100 sets an incentive for a user who transmits a captured video. For example, video information processing apparatus ex101 distributes videos with no charge or at discount rate to the user that transmits a video, or gives the user who transmits a video a point having a monetary value that can be used in an online or off-line store or in a game, or a point having a non-monetary value such as a social status in virtual space such as a game. Moreover, video information processing apparatus ex101 gives a particularly high point to the user who transmits the captured video of a valuable visual field (and/or viewpoint) such as a frequently requested video.

VARIATION 5

Video information processing apparatus ex101 may transmit additional information to the user camera based on an analysis result made by analyzer ex112. In this case, the user camera superimposes the additional information of the captured video, and displays the superimposed video on a screen. The additional information is, for example, information of a player such as a player name or height when a game in a stadium is captured, and the player name or a photograph of the player's face is displayed in association with each player in the video. Note that video information processing apparatus ex101 may extract the additional information by search via the Internet based on part or all areas of the video data. Moreover, camera ex102 may receive such additional information by the near field communication including Bluetooth (registered trademark) or by visible light communication from illumination of the stadium or the like, and may map the received additional information to the video data. Moreover, camera ex102 may perform this mapping based on a certain rule such as a table that is kept in the storage connected to camera ex102 wirelessly or with wires and that indicates correspondence between the information obtained by the visible light communication technology and the additional information. Camera ex102 may perform this mapping by using a result of a most probable combination by Internet search.

Moreover, in the monitoring system, a highly accurate monitoring system can be implemented, for example, by superimposition of information of a person on a blacklist on the user camera carried by a guard in the facility.

VARIATION 5

Analyzer ex112 may determine which area in the facility or in the stadium the user camera is capturing, by matching the free viewpoint video with the video captured by the user camera. Note that the method for determining the capturing area is not limited thereto, but various methods for determining the capturing area described in each of the above-described exemplary embodiments or other methods for determining the capturing area may be used.

Video information processing apparatus ex101 transmits a past video to the user camera based on the analysis result made by analyzer ex112. The user camera superimposes the past video on the captured video, or replaces the captured video with the past video, and displays the video on a screen.

For example, a highlight scene of a first half is displayed as a past video during halftime. This enables the user to enjoy the highlight scene of the first half during halftime as a video captured in a direction in which the user is watching. Note that the past video is not limited to the highlight scene of the first half, but may be the highlight scene of the past game held in the stadium. Moreover, timing at which video information processing apparatus ex101 distributes the past video is not limited to timing of distributing during halftime, but may be, for example, timing of distributing after the game end or during the game. In particular, in the case of distributing during halftime, video information processing apparatus ex101 may distribute a scene which the user has missed and which is considered to be important, based on the analysis result made by analyzer ex112. Moreover, video information processing apparatus ex101 may distribute the past video only when there is a user request, or may distribute a message of distribution permission prior to distribution of the past video.

VARIATION 6

Video information processing apparatus ex101 may transmit advertisement information to the user camera based on the analysis result made by analyzer ex112. The user camera superimposes the advertisement information of the captured video, and displays the superimposed video on a screen.

The advertisement information may be distributed, for example, immediately before distribution of the past video during halftime or after the game end as described in variation 5. This enables a distribution company to obtain advertising rates from an advertiser and to provide the user with video distribution services at a low cost or with no charge. Moreover, video information processing apparatus ex101 may distribute a message of advertisement distribution permission immediately before distribution of the advertisement information, or may provide services with no charge only when the user views the advertisement, or may provide services at a lower cost than a cost in the case where the user does not view the advertisement.

Moreover, when the user clicks "Order now" or the like in response to the advertisement, t a staff member who knows the position of the user based on the system or some positional information, or an automatic delivery system in the facility delivers an ordered drink to a seat of the user. Payment may be made by hand delivery to the staff member, or may be made based on credit card information set in an app of a mobile terminal or the like in advance. Moreover, the advertisement may include a link to an e-commerce site, and on-line shopping such as ordinary home delivery may be possible.

VARIATION 7

Video reception apparatus ex103 may be one of the cameras ex102 (user cameras). In this case, analyzer ex112 matches the free viewpoint video with the video captured by the user camera, and accordingly analyzer ex112 determines which area in the facility or in the stadium the user camera is capturing. Note that the method for determining the capturing area is not limited thereto.

For example, when the user performs a swipe operation in a direction of an arrow displayed on a screen, the user camera generates viewpoint information that indicates movement of the viewpoint in the direction. Video information processing apparatus ex101 reads from storage ex111 the video data that captures an area that is moved according to the viewpoint information from the area captured by the user camera determined by analyzer ex112, and video information processing apparatus ex101 starts transmission of the read video data to the user camera. Then, the user camera displays the video distributed from video information processing apparatus ex101, instead of the captured video.

This enables the user in the facility or in the stadium to view the video captured from a favorite viewpoint with such a simple operation as screen swipe. For example, a spectator who is watching a game on a third base side of a baseball stadium can view the video captured from the viewpoint on a first base side. Moreover, the monitoring system enables a guard in the facility to view, for example, the video of the viewpoint from which the guard wants to check or the video to be watched closely as an interruption from a center, while changing the viewpoint adaptively, with such a simple operation as screen swipe. For this reason, a highly accurate monitoring system can be implemented.

Moreover, distribution of the video to the user in the facility or in the stadium is effective, for example, even when an obstacle exists between the user camera and an object to be captured, and there is an invisible area. In this case, he user camera may switch the video of some area of the areas captured by the user camera that includes the obstacle, from the captured video to a video distributed from video information processing apparatus ex101, and may display the distributed video, or the user camera may switch the entire screen from the captured video to the distributed video, and may display the distributed video. Moreover, the user camera may combine the captured video with the distributed video to display the video that seems to penetrate the obstacle such that the object to be viewed is visible. Even when the object to be captured is invisible from the position of the user due to influence of the obstacle, this configuration can reduce the influence of the obstacle because the user can view the video distributed from video information processing apparatus ex101.

Moreover, when the distributed video is displayed as the video of the area invisible due to the obstacle, display switching control different from display switching control depending on input processing made by the user such as the screen swipe described above may be performed. For example, when it is determined that the capturing area includes the obstacle, based on information of movement and capturing direction of the user camera, and based on positional information of the obstacle obtained in advance, display switching from the captured video to the distributed video may be performed automatically. Moreover, when it is determined from analysis of the captured video data that the obstacle which is not the object to be captured is being captured, display switching from the captured video to the distributed video may be performed automatically. Moreover, when area of the obstacle in the captured video (for example, a number of pixels) exceeds a predetermined threshold, or when a ratio of the area of the obstacle to area of the object to be captured exceeds a predetermined proportion, display switching from the captured video to the distributed video may be performed automatically.

Note that the display switching from the captured video to the distributed video, and display switching from the distributed video to the captured video may performed in response to the input processing made by the user.

VARIATION 8

A speed at which the video data is transmitted to video information processing apparatus ex101 may be instructed based on importance of the video data captured by each camera ex102.

In this case, analyzer ex112 determines importance of video data stored in storage ex111 or importance of camera ex102 that captures the video data. The determination of the importance here is made based on, for example, a number of persons or a number of moving objects in the video, the information such as image quality of the video data, or combination thereof.

Moreover, the determination of the importance of the video data may be made based on the position of camera ex102 that captures the video data or the area captured in the video data. For example, when a plurality of other capturing cameras ex102 exists near camera ex102 concerned, the importance of the video data captured by camera ex102 concerned is set low. Moreover, when the position of camera ex102 concerned is distant from the positions of other cameras ex102, but there exists a plurality of other cameras ex102 that captures an identical area, the importance of the video data captured by camera ex102 concerned is set low. Moreover, the determination of the importance of the video data may be made based on frequency of requests in video distribution services. Note that the method for determining the importance is limited to neither the above-described methods nor combination thereof, but may be a method according to the configuration or purpose of the monitoring system or video distribution system.

Moreover, the determination of the importance may not be made based on the captured video data. For example, the importance of camera ex102 that transmits the video data to terminals other than video information processing apparatus ex101 may be set high. Conversely, the importance of camera ex102 that transmits the video data to terminals other than video information processing apparatus ex101 may be set low. Accordingly, for example, when a plurality of services that needs transmission of video data uses a common communication band, a degree of freedom of controlling the communication band according to a purpose or characteristics of each service increases. This prevents quality of each service to degrade because necessary video data cannot be obtained.

Moreover, analyzer ex112 may determine the importance of the video data by using the free viewpoint video and the captured video of camera ex102.

Video information processing apparatus ex101 transmits a communication speed instruction signal to camera ex102 based on a determination result of the importance made by analyzer ex112. Video information processing apparatus ex101 gives instruction of high speed communication to, for example, camera ex102 that is capturing a video with high importance. Moreover, n addition to speed control, regarding important information, video information processing apparatus ex101 may transmit a signal that instructs a scheme for sending the important information twice or more in order to reduce disadvantages owing to loss. This enables efficient communication in the entire facility or in the entire stadium. Note that communication between camera ex102 and video information processing apparatus ex101 may be wired communication, or may be wireless communication. Moreover, video information processing apparatus ex101 may control only any one of the wired communication and wireless communication.

Camera ex102 transmits the captured video data to video information processing apparatus ex101 at the communication speed according to the communication speed instruction signal. Note that when retransmission fails predetermined number of times, camera ex102 may stop retransmission of the captured video data and start transmission of next captured video data. This enables efficient communication in the entire facility or in the entire stadium and high-speed processing in analyzer ex112 can be implemented.

Moreover, when the communication speed allocated to each camera ex102 fails to have a bandwidth sufficient for transmitting the captured video data, camera ex102 may convert the captured video data into video data with a bit rate that enables transmission at the allocated communication speed, and transmit the converted video data, or may stop transmission of the video data.

Moreover, as described above, when the video data is used for preventing occurrence of a dead angle, only some area of the capturing areas in the captured video data is likely to be needed for filling the dead angle. In this case, camera ex102 may generate extracted video data by extracting at least only the area needed for preventing occurrence of the dead angle from the video data, and transmit the generated extracted video data to video information processing apparatus ex101. This configuration can realize suppression of occurrence of the dead angle at a narrower communication bandwidth.

Moreover, for example, when superimposed display or video distribution of the additional information is performed, camera ex102 needs to transmit the positional information and information of the capturing direction of camera ex102 to video information processing apparatus ex101. In this case, camera ex102 to which only the bandwidth insufficient for transmitting the video data is allocated may transmit only the positional information and information of the capturing direction detected by camera ex102. Moreover, when video information processing apparatus ex101 estimates the positional information and information of the capturing direction of camera ex102, camera ex102 may convert the captured video data into video data with resolution necessary for estimation of the positional information and the information of the capturing direction, and transmit the converted video data to video information processing apparatus ex101. This configuration can also provide superimposed display or video distribution services of the additional information to camera ex102 to which only the narrow communication bandwidth is allocated. Moreover, since video information processing apparatus ex101 can acquire information of the capturing area from more cameras ex102, video information processing apparatus ex101 is effective, for example, for using information of the capturing area for a purpose of detecting an area that attracts attention, or the like.

Note that the above-described switching of transmission processing of the video data according to the allocated communication bandwidth may be performed by camera ex102 based on the notified communication bandwidth, or video information processing apparatus ex101 may determine the operation of each camera ex102 and notify each camera ex102 of a control signal that indicates the determined operation. This enables appropriate sharing of tasks of processing according to an amount of calculation necessary for determination of switching of the operations, throughput of camera ex102, required communication bandwidth, and the like.

VARIATION 9

Analyzer ex112 may determine the importance of the video data based on the visual field information (and/or viewpoint information) transmitted from video reception apparatus ex103. For example, analyzer ex112 sets high importance of the captured video data including a lot of areas indicated by the visual field information (and/or viewpoint information). Moreover, analyzer ex112 may determine the importance of the video data in consideration of the number of persons or the number of moving objects in the video. Note that the method for determining the importance is not limited thereto.

Note that a communication control method described in the present exemplary embodiment does not necessarily need to be used in a system that reconstructs the three-dimensional shape from the plurality of pieces of video data. For example, when video data is transmitted by wired communication and/or wireless communication selectively or at a different transmission speed in an environment where there exists a plurality of cameras ex102, the communication control method described in the present exemplary embodiment is effective.

VARIATION 10

In the video distribution system, video information processing apparatus ex101 may transmit an outline video that indicates an entire capturing scene to video reception apparatus ex103.

Specifically, when video information processing apparatus ex101 has received a distribution request transmitted from video reception apparatus ex103, video information processing apparatus ex101 reads the outline video of an inside of the entire facility or an inside of the entire stadium from storage ex111, and transmits the external appearance video to video reception apparatus ex103. This outline video may have a long update interval (may have a low frame rate), and may have low image quality. A viewer touches a portion to watch in the outline video displayed on a screen of video reception apparatus ex103. Accordingly, video reception apparatus ex103 transmits the visual field information (and/or viewpoint information) corresponding to the touched portion to video information processing apparatus ex101.

Video information processing apparatus ex101 reads the video data corresponding to the visual field information (and/or viewpoint information) from storage ex111, and transmits the video data to video reception apparatus ex103.

Moreover, analyzer ex112 generates the free viewpoint video by preferentially restoring the three-dimensional shape (three-dimensional reconfiguration) of the area indicated by the visual field information (and/or viewpoint information). Analyzer ex112 restores the three-dimensional shape of an inside of the entire facility or an inside of the entire stadium with accuracy in the extent of indicating the outline. Accordingly, video information processing apparatus ex101 can efficiently restore the three-dimensional shape. As a result, a high frame rate and high image quality of the free viewpoint video of the area the viewer wants to watch can be implemented.

VARIATION 11

Note that video information processing apparatus ex101 may store in advance as a previous video, for example, three-dimensional shape restored data of the facility or stadium generated in advance from design drawings or the like. Note that the previous video is not limited thereto, but may be virtual space data in which unevenness of space obtained from a depth sensor and a picture derived from a past image or video data or an image or video data at a time of calibration are mapped for each object.

For example, when soccer is played in a stadium, analyzer ex112 may restore only the three-dimensional shapes of players and a ball, and generate the free viewpoint video by combining the obtained restored data and the previous video. Alternatively, analyzer ex112 may preferentially restore the three-dimensional shapes of players and a ball. Accordingly, video information processing apparatus ex101 can restore the three-dimensional shape efficiently. As a result, a high frame rate and high image quality of the free viewpoint video regarding players and a ball to which viewers pay attention can be implemented. Moreover, in the monitoring system, analyzer ex112 may preferentially restore only the three-dimensional shapes of persons and moving objects.

VARIATION 12

Time of each apparatus may be calibrated when capturing starts, based on information such as reference time of the server. Analyzer ex112 restores the three-dimensional shape by using the plurality of pieces of video data captured at time within a preset time range among the plurality of pieces of captured video data captured by the plurality of cameras ex102 in accordance with accuracy of time settings. This detection of time uses, for example, time when the captured video data is stored in storage ex111. Note that the method for detecting time is not limited thereto. Accordingly, since video information processing apparatus ex101 can restore the three-dimensional shape efficiently, a high frame rate and high image quality of the free viewpoint video can be implemented.

Alternatively, analyzer ex112 may restore the three-dimensional shape by using only high-quality data, or by preferentially using high-quality data among the plurality of pieces of video data stored in storage ex111.

VARIATION 13

Analyzer ex112 may restore the three-dimensional shape by using camera attribute information. For example, analyzer ex112 may generate the three-dimensional shape video by a method such as a volume intersection method or a multi-view stereo method by using camera attribute information. In this case, camera ex102 transmits the captured video data and the camera attribute information to video information processing apparatus ex101. Examples of the camera attribute information include a capturing position, a capturing angle, capturing time, and zoom magnification.

Accordingly, since video information processing apparatus ex101 can restore the three-dimensional shape efficiently, a high frame rate and high image quality of the free viewpoint video can be implemented.

Specifically, camera ex102 defines three-dimensional coordinates in the facility or in the stadium, and transmits to video information processing apparatus ex101 information as camera attribute information that indicates an angle, zoom magnification, and time of capturing of certain coordinates by camera ex102, together with the video. Moreover, when camera ex102 is activated, a clock on a communication network in the facility or in the stadium is synchronized with a clock in the camera, and time information is generated.

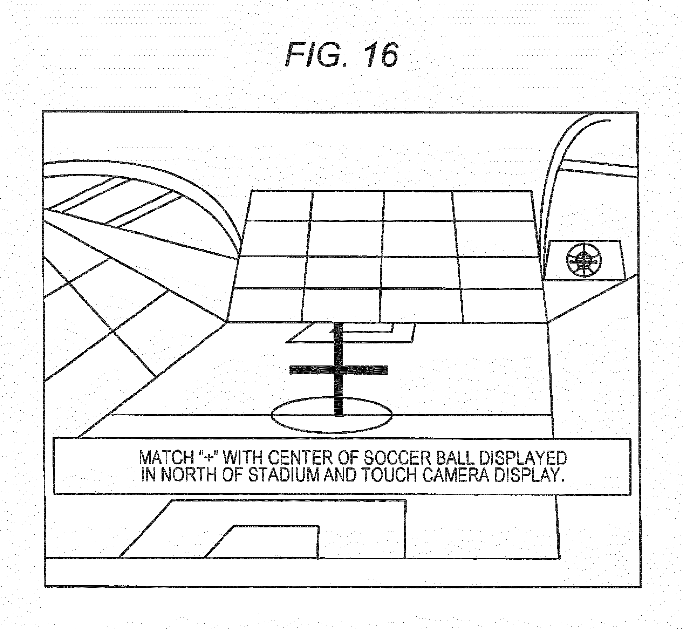

Moreover, the positional and angle information of camera ex102 is acquired by pointing camera ex102 at a specific point in the facility or in the stadium when camera ex102 is activated or at any timing. FIG. 16 is a diagram illustrating an example of notification displayed on a screen of camera ex102 when camera ex102 is activated. When the user matches "+" displayed in a center of the screen with "+" which is in a center of a soccer ball in advertisement in north of the stadium in response to this notification and touches the display of camera ex102, camera ex102 acquires vector information from camera ex102 to the advertisement, and identifies reference of the camera position and angle. Subsequently, camera coordinates and an angle at each time are identified from motion information of camera ex102. Of course, the display is not limited thereto, and display that instructs coordinates, an angle, or a movement speed of the capturing area during a capturing period by using an arrow or the like may be used.

The coordinates of camera ex102 may be identified by using a radio wave of the global positioning system (GPS), wireless fidelity (WiFi) (registered trademark), third generation (3G), long term evolution (LTE), and fifth generation (5G) (wireless LAN), or by using the near field communication such as beacon (Bluetooth (registered trademark), ultrasonic waves). Moreover, information about which base station in the facility or in the stadium has received the captured video data may be used.

VARIATION 14

The system may be provided as an application that operates on a mobile terminal such as a smartphone.

Accounts of various social networking services (SNS) or the like may be used for login to the system. Note that an account dedicated to an app or a guest account that has limited functions may be used. Favorite videos, favorite accounts or the like can be evaluated by using the accounts in such a manner. Moreover, the bandwidth is preferentially allocated to, for example, video data similar to video data that is being captured or viewed, or to video data of the viewpoint similar to the viewpoint of video data that is being captured or viewed, and this can increase resolution of these pieces of video data. Accordingly, the three-dimensional shape from these viewpoints can be restored with better accuracy.

Moreover, the user can preferentially watch the selected image over other users by selecting a favorite image video and by following the other party with the application, or the user can have connection by text chatting or the like on condition of approval of the other party. Thus, it is possible to generate a new community.

Thus, connection between the users in the community can activate capturing itself or sharing of captured images, and can prompt restoration of three-dimensional shapes with higher accuracy.

Moreover, according to settings of connection in the community, the user can edit images or videos captured by another person, or can perform collage of an image of another person and an image of the user to create a new image or video. This enables sharing of a new video work, such as sharing the new image or video only with persons in the community. Moreover, the video work can also be used for a game of augmented reality or the like by inserting a computer-graphics (CG) character in this editing.

Moreover, since the system enables sequential output of three-dimensional model data, a 3D printer or the like that the facility has can output a three-dimensional object, based on the three-dimensional model data in a characteristic scene such as a goal scene. This also enables sale after the game of an object based on the scene during the game as a souvenir such as a key ring, or distribution after the game of such an object to participating users. Of course, this also enables printing of an image captured from the best viewpoint as an ordinary photograph.

VARIATION 15

A center connected to the system can used the above-described system to manage a rough state of the overall region, for example, from a video of a vehicle-mounted camera of the police and a wearable camera of a police officer, and the like.

During ordinary patrol, still images are transmitted and received, for example, every several minutes. Moreover, the center identifies a region in which crime is highly likely to occur, based on a criminal map prepared based on a result of analysis using past criminal data or the like. Alternatively, the center keeps regional data related to a crime rate identified in this manner. In a region with the identified high-crime-rate, high frequency of transmission and reception of images may be set, or a change of images to moving images may be made. Moreover, when an incident occurs, moving images or three-dimensional reconfiguration data using SfM may be used. Moreover, the center or each terminal can compensate the image or virtual space by simultaneously using information from other sensors such as a depth sensor and a thermal sensor, and accordingly the police officer can understand the situation with better accuracy.

Moreover, the center can used the three-dimensional reconfiguration data to feed back information of the object to the plurality of terminals. This enables each individual person having a terminal to keep track of the object.

Moreover, in these years, capturing has been performed from the air by an apparatus that can fly such as a quadcopter and a drone, for purposes of investigation of buildings or environment, capturing with realism such as sports or the like. While blur of images is likely to become a problem in capturing by such an autonomous moving apparatus, SfM can create three dimensions while compensating the blur with a position and an inclination. This can realize improvement in image quality and improvement in restoration accuracy of space.

Moreover, installation of a vehicle-mounted camera that captures an outside of a car is mandatory in some countries. In such a vehicle-mounted camera, weather and a road surface state in a direction of a destination, traffic congestion level and the like can be understood with better accuracy by using three-dimensional data modeled from a plurality of images.

VARIATION 16

The above-described system may also be applied to a system that performs distance measurement or modeling of a building or equipment by using a plurality of cameras, for example.

Here, for example, in a case of capturing an image of a building from above using one drone, and performing distance measurement or modeling of the building, there is a problem in that an image of an animal may be captured by the camera during distance measurement, thereby reducing the accuracy of distance measurement. There is also a problem in that distance measurement and modeling cannot be performed with respect to an animal.

Meanwhile, by using a plurality of cameras (fixed cameras, smartphones, wearable cameras, drones, etc.) as described above, distance measurement and modeling of a building may be performed with stable accuracy regardless of presence or absence of an animal. Also, distance measurement and modeling may be performed with respect to an animal.

Specifically, for example, at a construction site, a camera is attached to a helmet or the like of a worker. This allows distance measurement of the building to be performed in parallel to the work of the worker. Also, efficiency of work may be increased, and mistakes may be prevented. Furthermore, modeling of the building may be performed by using a video captured by the camera worn by the worker. Moreover, a manager at a remote location may check the progress by looking at a modeled building.

Moreover, this system may be used for inspection of equipment that cannot be stopped, such as a machine at a factory or a power station. Also, this system can be used to inspect opening/closing of a bridge or a dam, or to inspect an abnormality in the operation of a ride in an amusement park, for example.

Moreover, by monitoring the level of traffic jam or the amount of traffic on a road by this system, a map indicating the level of traffic jam or the amount of traffic on the road in each time zone may be created.

FOURTH EXEMPLARY EMBODIMENT

The processing described in each of the above-described exemplary embodiments can be carried out easily in a standalone computer system by recording a program for implementing the configuration of the image processing method described in each exemplary embodiment on a storage medium. The storage medium may be any type of medium capable of storing the program, such as a magnetic disk, an optical disc, a magneto-optical disk, an integrated circuit (IC) card, and a semiconductor memory.

Here, application examples of the image processing method described in each of the exemplary embodiments and the systems using the application examples will be further described. The systems include an apparatus that uses the image processing method. A change in other configurations of the systems can be made appropriately in accordance with the circumstances.

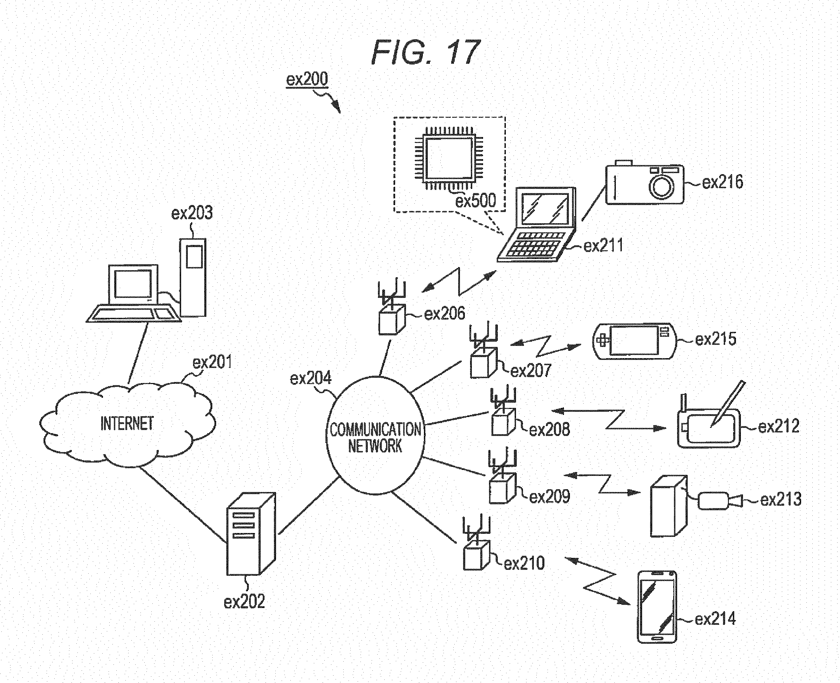

FIG. 17 is a diagram illustrating an overall configuration of content providing system ex200 that implements content distribution services. An area in which communication services are provided is divided with a desired size. Base stations ex206, ex207, ex208, ex209, and ex210 which are fixed wireless stations are installed in respective cells.

in content providing system ex200, various devices such as computer ex211, personal digital assistant (PDA) ex212, camera ex213, smartphone ex214, and game machine ex215 are connected to Internet ex201 via Internet service provider ex202, wide area network (WAN) ex204, and base stations ex206 to ex210.

However, the configuration of content providing system ex200 is not limited to the configuration illustrated in FIG. 17, and any elements may be combined and connected. Moreover, each device may be connected directly to telephone lines, cable TV, or WAN ex204 such as optical communication, instead of via base stations ex206 to ex210 which are fixed wireless stations. Alternatively, each device may be interconnected directly via near field communication or the like.

Camera ex213 is a device capable of capturing moving images, such as a digital camcorder. Camera ex216 is a device capable of capturing still images and moving images, such as a digital camera. Moreover, smartphone ex214 is, for example, a smartphone conforming to a global system for mobile communication (GSM) (registered trademark) scheme, a code division multiple access (CDMA) scheme, a wideband-code division multiple access (W-CDMA) scheme, an long term evolution (LTE) scheme, an high speed packet access (HSPA) scheme, or a communication scheme using high-frequency bands, or a personal handyphone system (PHS), and smartphone ex214 may be any of them.

In content providing system ex200, camera ex213 or the like is connected to streaming server ex203 via base station ex209 and WAN ex204. Accordingly, live streaming or the like becomes possible. In the live streaming, coding processing is performed on content (for example, a video of a music event) captured by the user using camera ex213 and the resulting content is transmitted to streaming server ex203. Meanwhile, streaming server ex203 perform stream distribution of content data transmitted to a client that has made a request. Examples of the client include computer ex211, PDA ex212, camera ex213, smartphone ex214, and game machine ex215 capable of decoding the data that has undergone the coding processing. Each device that has received the distributed data performs decoding processing on the received data to reproduce the data.

Note that the coding processing of the captured video may be performed by camera ex213, or may be performed by streaming server ex203 that performs data transmission processing, or camera ex213 and streaming server ex203 may share tasks of the coding processing of the captured video with each other. Similarly, the decoding processing of the distributed data may be performed by the client, or may be performed by streaming server ex203, or the client and streaming server ex203 may share tasks of the decoding processing of the captured video with each other. Moreover, in addition to still and/or moving image data captured by camera ex213, still and/or moving image data captured by camera ex216 may be transmitted to streaming server ex203 via computer ex211. In this case, the coding processing may be performed by any of camera ex216, computer ex211, and streaming server ex203, or camera ex216, computer ex211, and streaming server ex203 may share tasks of the coding processing with each other. Further, regarding display of the decoded image, a plurality of devices connected to the system may cooperate to display an identical image, or a device having a large display unit may display the entire image and a device such as smartphone ex214 may enlarge and display some area of the image.

Moreover, the coding processing and the decoding processing are performed in general by LSI ex500 in computer ex211 or each device. LSI ex500 may be formed as a single chip or a plurality of chips. Note that software for coding/decoding a moving image may be recorded on any recording medium (such as a CD-ROM, a flexible disk, and a hard disk) that is readable by computer ex211 or the like, and the coding processing and the decoding processing may be performed using the software. Further, in the case where smartphone ex214 is equipped with a camera, moving image data acquired by the camera may be transmitted. This moving image data is data that has been coded by LSI ex500 in smartphone ex214.

Moreover, streaming server ex203 may be a plurality of servers or a plurality of computers that processes, records, and distributes data.

In the above-described manner, content providing system ex200 enables the client to receive and reproduce coded data. Thus, content providing system ex200 enables the client to receive, decode, and reproduce in real time information transmitted by a user, and enables even a user having no special right or equipment to implement personal broadcasting.

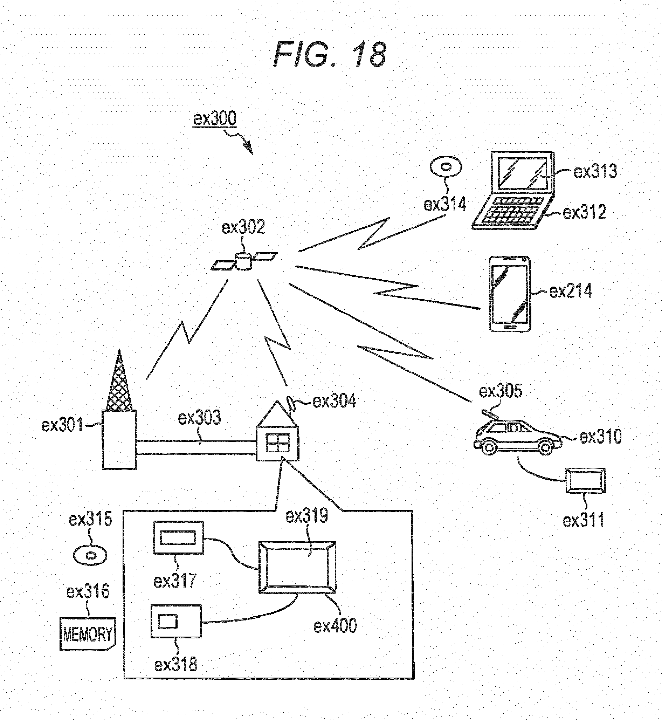

Note that in addition to the example of content providing system ex200, each of the above-described exemplary embodiments may also be applied to digital broadcasting system ex300, as illustrated in FIG. 18. Specifically, broadcasting station ex301 transmits multiplexed data obtained by multiplexing video data with music data or the like via a radio wave to communication or satellite ex302. This video data is data coded by the moving image coding method described in each of the above-described exemplary embodiments. Broadcasting satellite ex302 that has received this data transmits a broadcasting radio wave, and home antenna ex304 capable of receiving satellite broadcasting receives this radio wave. An apparatus such as television (receiver) ex400 or set top box (STB) ex317 decodes and reproduces the received multiplexed data.

Moreover, the moving image decoding apparatus or the moving image coding apparatus described in each of the above-described exemplary embodiments can be implemented in reader/recorder ex318 that reads and decodes the multiplexed data recorded on recording medium ex315 such as a digital versatile disc (DVD) and a blu-ray disc (BD) or memory ex316 such as an secured digital (SD), or that codes a video signal and further multiplexes the video signal with a music signal depending on circumstances, and writes the resulting signal on recording medium ex315 or memory ex316. In this case, monitor ex319 may display the reproduced video signal, and another apparatus or system can reproduce the video signal by using recording medium ex315 or memory ex316 having the multiplexed data recorded thereon. Moreover, the moving image decoding apparatus may be implemented in set top box ex317 connected to cable ex303 for a community antenna television system (CATV) or antenna ex304 for satellite/terrestrial broadcasting, and monitor ex319 of the television may display the video signal. At this time, the moving image decoding apparatus may be incorporated into the television instead of the set top box.

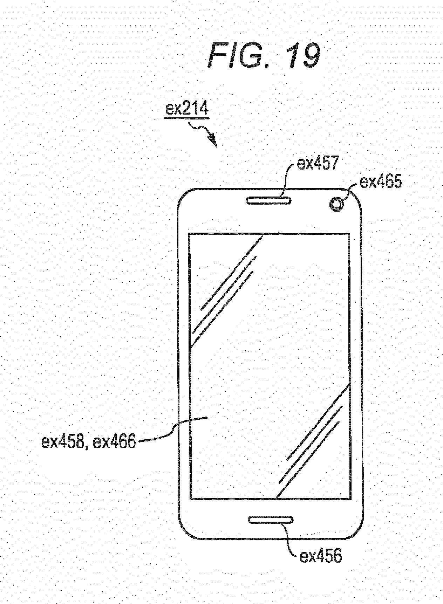

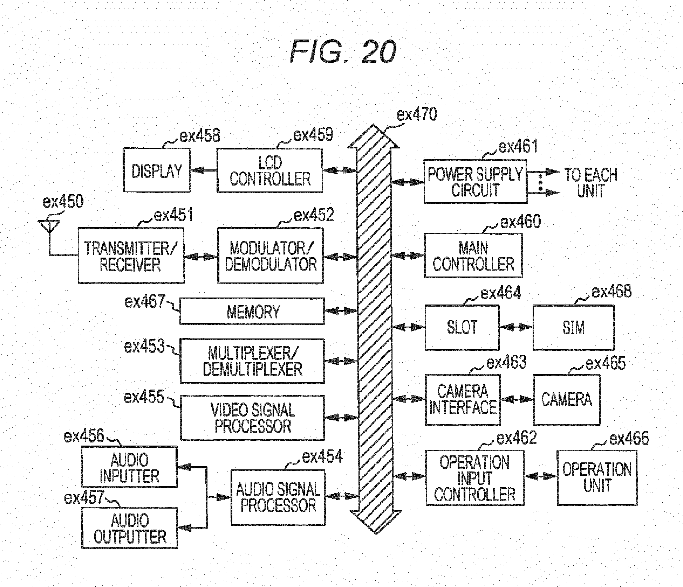

FIG. 19 is a diagram illustrating smartphone ex214. Moreover, FIG. 20 is a diagram illustrating a configuration example of smartphone ex214. Smartphone ex214 includes antenna ex450 that transmits and receives a radio wave to and from base station ex210, camera ex465 capable of capturing a video and a still image, and display unit ex458 such as a liquid crystal display that displays the video captured by camera ex465 and data obtained by decoding a video or the like received on antenna ex450. Smartphone ex214 further includes operation unit ex466 which is a touch panel or the like, audio outputter ex457 such as a speaker for outputting audio, audio inputter ex456 such as a microphone for inputting audio, memory unit ex467 capable of storing coded data or decoded data of a captured video, a captured still image, recorded audio, a received video, a received still image, or a received email, memory ex316 illustrated in FIG. 18, or slot ex464 which is an interface to SIM ex468 for identifying a user and for authentication of access to various types of data including a network.

In smartphone ex214, power supply circuit ex461, operation input controller ex462, video signal processor ex455, camera interface ex463, liquid crystal display (LCD) controller ex459, modulator/demodulator ex452, multiplexer/demultiplexer ex453, audio signal processor ex454, slot ex464, and memory unit ex467 are connected via bus ex470 to main controller ex460 that comprehensively controls display unit ex458, operation unit ex466 and the like, respectively.

When an on-hook/power key is turned on by a user operation, power supply circuit ex461 supplies electric power to each unit from a battery pack, and accordingly activates smartphone ex214 into an operable state.

In smartphone ex214 based on control of main controller ex460 that includes a CPU, a ROM, a RAM and the like, audio signal processor ex454 converts an audio signal recorded with audio inputter ex456 in a voice call mode into a digital audio signal, and modulator/demodulator ex452 performs spread spectrum processing on this digital audio signal, and transmitter/receiver ex451 performs digital-to-analog conversion processing and frequency conversion processing on this signal and then transmits the resulting signal via antenna ex450. Moreover, smartphone ex214, amplifies reception data received via antenna ex450 in the voice call mode and performs frequency conversion processing and analog-to-digital conversion processing on the data, and modulator/demodulator ex452 performs spread spectrum processing on the resulting signal, and audio signal processor ex454 converts the resulting signal into an analog audio signal, and then audio outputter ex457 outputs the analog audio signal.

In the case where an email is transmitted in a data communication mode, text data of the email input by operation of operation unit ex466 or the like of a body is sent to main controller ex460 via operation input controller ex462. In main controller ex460 modulator/demodulator ex452 performs spread spectrum processing on the text data, and transmitter/receiver ex451 performs digital-to-analog conversion processing and frequency conversion processing on the text data and then transmits the resulting text data to base station ex210 via antenna ex450. In the case of receiving an email, substantially the opposite processing is performed on the received data, and the resulting data is output to display unit ex458.

In the case where a video, a still image, or a combination of a video and audio are transmitted in the data communication mode, video signal processor ex455 compresses and codes a video signal supplied from camera ex465 by the moving image coding method described in each of the above exemplary embodiments, and sends the coded video data to multiplexer/demultiplexer ex453. Moreover, audio signal processor ex454 codes an audio signal recorded with audio inputter ex456 while the video, the still image, or the like is being captured by camera ex465, and sends the coded audio data to multiplexer/demultiplexer ex453.

Multiplexer/demultiplexer ex453 multiplexes the coded video data supplied from video signal processor ex455 and the coded audio data supplied from audio signal processor ex454 by a predetermined scheme. Modulator/demodulator (modulation/demodulation circuit) ex452 performs spread spectrum processing on the resulting multiplexed data. Transmitter/receiver ex451 performs digital-to-analog conversion processing and frequency conversion processing on the multiplexed data, and then transmits the resulting data via antenna ex450.

In the case of receiving data of a moving image file linked to a website or the like in the data communication mode, or in the case of receiving an email having a video or audio attached thereto, multiplexer/demultiplexer ex453 demultiplexes multiplexed data into a bitstream of video data and a bitstream of audio data in order to decode the multiplexed data received via antenna ex450. Multiplexer/demultiplexer ex453 supplies the coded video data to video signal processor ex455 and the coded audio data to audio signal processor ex454 via synchronization bus ex470. Video signal processor ex455 decodes the video signal by a moving image decoding method corresponding to the moving image coding method described in each of the above exemplary embodiments. Display unit ex458 displays via LCD controller ex459 a video or still image in the moving image file linked to the website. Moreover, audio signal processor ex454 decodes the audio signal, and audio outputter ex457 outputs audio.

Moreover, like television ex400, three implementation forms of a terminal such as smartphone ex214, that is, a transmission/reception terminal including both an encoder and a decoder, a transmission terminal including only an encoder, and a reception terminal including only a decoder, are conceivable. Further, digital broadcasting system ex300 in which multiplexed data obtained by multiplexing video data with music data or the like is received and transmitted is described above; however, the multiplexed data may be data obtained by multiplexing text data or the like related to the video other than audio data, or may be video data as is instead of the multiplexed data.

Moreover, the present disclosure is not limited to the above-described exemplary embodiments, and various variations or modifications can be made without departing from the scope of the present disclosure.

INDUSTRIAL APPLICABILITY

According to the present disclosure, synchronization may be automatically performed with respect to a multi-viewpoint video captured by a plurality of cameras with higher accuracy than in a conventional method, and a multi-viewpoint video may be applied to synchronized reproduction, panoramic video generation, three-dimensional video generation, and the like.

REFERENCE MARKS IN THE DRAWINGS

| | |
|---|---|
| 100 | camera |
| 101 | subject |
| 102 | end user |
| 111, 112 | video |
| 113 | synchronization information |
| 114 | camera information |
| 121 | frame |
| 122 | feature point information |
| 123, 124 | matching information |
| 125 | estimated information |
| 126 | candidate synchronization frame |
| 200 | video synchronization apparatus |
| 210 | inputter |
| 220 | synchronization processor |
| 221 | feature quantity extractor |

222        synchronization information acquirer
230        outputter
231        frame acquirer
232        feature point detector
233        feature point matcher
234        matching information corrector
241        three-dimensional reconstructor
242        candidate synchronization frame extractor
243        synchronization frame determiner

**Claims**

1. A video synchronization apparatus comprising:

   a processor (220); and
   a storage connected to the processor (220),
   wherein the processor (220) is adapted to perform
   a detection step of detecting a first feature point in a first image frame in a first video, and a second feature point in each of a plurality of second image frames in a second video;
   an extraction step of extracting matching points that are a set of the first feature point and a second feature point that is similar to the first feature point; and
   a synchronization step of determining a second image frame to be synchronized with the first image frame, based on a first degree of satisfaction, by a matching point in each second image frame, of a first geometric relationship between the each second image frame and the first image frame;
   **characterized in that**
   the first geometric relationship is an epipolar constraint; and
   the first degree of satisfaction of the first geometric relationship is determined based on a result calculated using a fundamental matrix in the epipolar constraint,
   in the extraction step, a plurality of the matching points are extracted from each of the plurality of second image frames; and
   the synchronization step includes:

      a removal step of calculating, for each of the plurality of second image frames, the first degree of satisfaction of the first geometric relationship by each of the plurality of matching points, and removing, from the plurality of matching points, a matching point for which the calculated first degree is lower than a threshold; and
      a determination step of determining a second image frame to be synchronized with the first image frame, among the plurality of second image frames, based on a matching point after the removing obtained for each of the plurality of second image frames,
      the synchronization step further includes a calculation step of calculating the first geometric relationship for each of the plurality of second image frames by using at least one of the plurality of matching points; and
      in the removal step, the first degree of satisfaction of the calculated first geometric relationship by each of the matching points is calculated,
      in the calculation step, a fundamental matrix in epipolar constraint is calculated by using at least one of the plurality of matching points,
      in the removal step, the first degree of satisfaction of the epipolar constraint by each of the matching points is calculated by using the fundamental matrix, and
      in the determination step, a second image frame for which a number of matching points after the removing is greater than a threshold is determined as a second image frame to be synchronized with the first image frame.

2. The video synchronization apparatus according to claim 1, wherein in the detection step, the first feature point and the second feature point are detected based on at least one of a contour of a subject, a luminance difference, and a color difference.

3. The video synchronization apparatus according to claim 1, wherein

   in the detection step, a third feature point in each of a plurality of third image frames in a third video is further detected;

in the extraction step, a set of the first feature point and a third feature point that is similar to the first feature point, and a set of the second feature point and a third feature point that is similar to the second feature point are further extracted as the matching points; and

in the synchronization step, the first degree is calculated for each of combinations including one first image frame, one of the plurality of second image frames, and one of the plurality of third image frames, and a first image frame, a second image frame, and a third image frame included in a combination for which the calculated first degree is high, among a plurality of the combinations, are synchronized.

4. A video synchronization apparatus comprising:

a detector (232) adapted to detect a first feature point in a first image frame in a first video, and a second feature point in each of a plurality of second image frames in a second video;

an extractor (233) adapted to extract matching points that are a set of the first feature point and a second feature point that is similar to the first feature point; and

a synchronizer (222,234) adapted to determine a second image frame to be synchronized with the first image frame, based on a first degree of satisfaction, by a matching point in each second image frame, of a first geometric relationship between the each second image frame and the first image frame;

**characterized in that**

the first geometric relationship is an epipolar constraint; and

the first degree of satisfaction of the first geometric relationship is determined based on a result calculated using a fundamental matrix in the epipolar constraint,

the extractor (233) is adapted to extract a plurality of the matching points from each of the plurality of second image frames; and

the synchronizer (223, 234) is adapted to calculate, for each of the plurality of second image frames, the first degree of satisfaction of the first geometric relationship by each of the plurality of matching points, and to remove, from the plurality of matching points, a matching point for which the calculated first degree is lower than a threshold; and

to determine a second image frame to be synchronized with the first image frame,

among the plurality of second image frames, based on a matching point after the removing obtained for each of the plurality of second image frames,

the synchronizer (223, 234) is further adapted to calculate the first geometric relationship for each of the plurality of second image frames by using at least one of the plurality of matching points; and

in the removing, the first degree of satisfaction of the calculated first geometric relationship by each of the matching points is calculated,

in the calculating a first degree pf satisfaction of the first geometric relationship, a fundamental matrix in epipolar constraint is calculated by using at least one of the plurality of matching points,

in the removing, the first degree of satisfaction of the epipolar constraint by each of the matching points is calculated by using the fundamental matrix, and

in the determining, a second image frame for which a number of matching points after the removing is greater than a threshold is determined as a second image frame to be synchronized with the first image frame.

5. A video synchronization method comprising:

a detection step (S12) of detecting a first feature point in a first image frame in a first video, and a second feature point in each of a plurality of second image frames in a second video;

an extraction step (S14) of extracting matching points that are a set of the first feature point and a second feature point that is similar to the first feature point; and

a synchronization step (S15,S16) of determining a second image frame to be synchronized with the first image frame, based on a first degree of satisfaction, by a matching point in each second image frame, of a first geometric relationship between the each second image frame and the first image frame;

**characterized in that**

the first geometric relationship is an epipolar constraint; and

the first degree of satisfaction of the first geometric relationship is determined based on a result calculated using a fundamental matrix in the epipolar constraint,

in the extraction step (S14), a plurality of the matching points are extracted from each of the plurality of second image frames; and

the synchronization step (S15, S16) includes:

a removal step (S24) of calculating, for each of the plurality of second image frames, the first degree of satisfaction of the first geometric relationship by each of the plurality of matching points, and removing, from the plurality of matching points, a matching point for which the calculated first degree is lower than a threshold; and

a determination step (S16) of determining a second image frame to be synchronized with the first image frame, among the plurality of second image frames, based on a matching point after the removing obtained for each of the plurality of second image frames,

the synchronization step (S15) further includes a calculation step (S21) of calculating the first geometric relationship for each of the plurality of second image frames by using at least one of the plurality of matching points; and

in the removal step (S24), the first degree of satisfaction of the calculated first geometric relationship by each of the matching points is calculated,

in the calculation step (S21), a fundamental matrix in epipolar constraint is calculated by using at least one of the plurality of matching points,

in the removal step (S24), the first degree of satisfaction of the epipolar constraint by each of the matching points is calculated by using the fundamental matrix, and

in the determination step (S16), a second image frame for which a number of matching points after the removing is greater than a threshold is determined as a second image frame to be synchronized with the first image frame.

6.  A program for causing a computer to execute the video synchronization method according to claim 5.

7.  A system comprising:

    a plurality of cameras; and
    the video synchronization apparatus according to any of claims 1 to 3 for synchronizing a plurality of videos captured by the plurality of cameras.

**Patentansprüche**

1.  Videosynchronisationsvorrichtung, die umfasst:

    einen Prozessor (220); und
    einen mit dem Prozessor (220) verbundenen Speicher,
    wobei der Prozessor (220) dazu eingerichtet ist, Folgendes durchzuführen:

    einen Ermittlungsschritt zum Ermitteln eines ersten Merkmalspunkts in einem ersten Bildframe in einem ersten Video und eines zweiten Merkmalspunkts in jedem einer Vielzahl von zweiten Bildframes in einem zweiten Video;
    einen Extraktionsschritt zum Extrahieren übereinstimmender Punkte, die ein Satz des ersten Merkmalspunkts und eines zweiten Merkmalspunkts sind, der dem ersten Merkmalspunkt ähnlich ist; und
    einen Synchronisationsschritt zum Bestimmen eines zweiten Bildframes, der mit dem ersten Bildframe zu synchronisieren ist, basierend auf einem ersten Erfüllungsgrad einer ersten geometrischen Beziehung zwischen jedem zweiten Bildframe und dem ersten Bildframe durch einen Übereinstimmungspunkt in jedem zweiten Bildframe;
    **dadurch gekennzeichnet, dass**
    die erste geometrische Beziehung eine Epipolarbedingung ist; und
    der erste Erfüllungsgrad der ersten geometrischen Beziehung auf der Grundlage eines Ergebnisses bestimmt wird, das unter Verwendung einer Fundamentalmatrix in der Epipolarbedingung berechnet wird,
    in dem Extraktionsschritt eine Vielzahl der übereinstimmenden Punkte aus jedem der Vielzahl von zweiten Bildframes extrahiert werden; und
    der Synchronisationsschritt beinhaltet:

    einen Entfernungsschritt zum Berechnen, für jeden der Vielzahl von zweiten Bildframes, des ersten Erfüllungsgrades der ersten geometrischen Beziehung durch jeden der Vielzahl von übereinstimmenden Punkten und zum Entfernen, aus der Vielzahl von übereinstimmenden Punkten, eines übereinstimmenden Punktes, für den der berechnete erste Grad niedriger als ein Schwellenwert ist; und

einen Bestimmungsschritt zum Bestimmen eines zweiten Bildframes, der mit dem ersten Bildframe zu synchronisieren ist, aus der Vielzahl der zweiten Bildframes, basierend auf einem übereinstimmenden Punkt nach dem Entfernen, der für jeden der Vielzahl von zweiten Bildframes erhalten wurde,

der Synchronisationsschritt ferner einen Berechnungsschritt zum Berechnen der ersten geometrischen Beziehung für jeden der Vielzahl von zweiten Bildframes unter Verwendung von mindestens einem der Vielzahl von übereinstimmenden Punkten beinhaltet; und

In dem Entfernungsschritt der erste Erfüllungsgrad der berechneten ersten geometrischen Beziehung durch jeden der übereinstimmenden Punkte berechnet wird,

in dem Berechnungsschritt eine Fundamentalmatrix in Epipolarbedingung unter Verwendung von mindestens einem der Vielzahl von übereinstimmenden Punkten berechnet wird,

in dem Entfernungsschritt der erste Erfüllungsgrad der Epipolarbedingung durch jeden der übereinstimmenden Punkte unter Verwendung der Fundamentalmatrix berechnet wird, und

in dem Bestimmungsschritt ein zweiter Bildframe, für den eine Anzahl von übereinstimmenden Punkten nach dem Entfernen größer als ein Schwellenwert ist, als ein zweiter Bildframe bestimmt wird, der mit dem ersten Bildframe zu synchronisieren ist.

2. Videosynchronisationsvorrichtung nach Anspruch 1, wobei in dem Ermittlungsschritt der erste Merkmalspunkt und der zweite Merkmalspunkt auf der Grundlage von mindestens einem aus einer Kontur eines Objekts, einer Luminanzdifferenz und einer Farbdifferenz ermittelt werden.

3. Videosynchronisationsvorrichtung nach Anspruch 1, wobei

in dem Ermittlungsschritt ferner ein dritter Merkmalspunkt in jedem einer Vielzahl von dritten Bildframes in einem dritten Video ermittelt wird;

in dem Extraktionsschritt ferner ein Satz des ersten Merkmalspunkts und eines dritten Merkmalspunkts, der dem ersten Merkmalspunkt ähnlich ist, und ein Satz des zweiten Merkmalspunkts und eines dritten Merkmalspunkts, der dem zweiten Merkmalspunkt ähnlich ist, als die übereinstimmenden Punkte extrahiert werden; und

in dem Synchronisationsschritt der erste Grad für jede der Kombinationen berechnet wird, die einen ersten Bildframe, einen aus der Vielzahl von zweiten Bildframes und einen aus der Vielzahl von dritten Bildframes enthalten, und einen ersten Bildframe, einen zweiten Bildframe und einen dritten Bildframe, die in einer Kombination enthalten sind, für die der berechnete erste Grad hoch ist, aus einer Vielzahl der Kombinationen synchronisiert werden.

4. Videosynchronisationsvorrichtung, die umfasst:

einen Detektor (232), der dazu eingerichtet ist, einen ersten Merkmalspunkt in einem ersten Bildframe in einem ersten Video und einen zweiten Merkmalspunkt in jedem einer Vielzahl von zweiten Bildframes in einem zweiten Video zu ermitteln;

einen Extraktor (233), der dazu eingerichtet ist, übereinstimmende Punkte zu extrahieren, die ein Satz des ersten Merkmalspunkts und eines zweiten Merkmalspunkts sind, der dem ersten Merkmalspunkt ähnlich ist; und

eine Synchronisationseinrichtung (222, 234), die dazu eingerichtet ist, einen zweiten Bildframe zu bestimmen, der mit dem ersten Bildframe zu synchronisieren ist, basierend auf einem ersten Erfüllungsgrad einer ersten geometrischen Beziehung zwischen jedem zweiten Bildframe und dem ersten Bildframe durch einen Übereinstimmungspunkt in jedem zweiten Bildframe;

**dadurch gekennzeichnet, dass**

die erste geometrische Beziehung eine Epipolarbedingung ist; und

der erste Erfüllungsgrad der ersten geometrischen Beziehung auf der Grundlage eines Ergebnisses bestimmt wird, das unter Verwendung einer Fundamentalmatrix in der Epipolarbedingung berechnet wird,

der Extraktor (233) dazu eingerichtet ist, eine Vielzahl der übereinstimmenden Punkte aus jedem der Vielzahl von zweiten Bildframes zu extrahieren; und

die Synchronisationseinrichtung (223, 234) dazu eingerichtet ist, für jeden der Vielzahl von zweiten Bildframes den ersten Erfüllungsgrad der ersten geometrischen Beziehung durch jeden der Vielzahl von übereinstimmenden Punkten zu berechnen und dazu, aus der Vielzahl von übereinstimmenden Punkten einen übereinstimmenden Punkt zu entfernen, für den der berechnete erste Grad niedriger als ein Schwellenwert ist; und

einen zweiten Bildframe, der mit dem ersten Bildframe zu synchronisieren ist, aus der Vielzahl der zweiten Bildframes zu bestimmen, basierend auf einem übereinstimmenden Punkt nach dem Entfernen, der für jeden der Vielzahl von zweiten Bildframes erhalten wurde,

wobei die Synchronisationseinrichtung (223, 234) ferner dazu eingerichtet ist, die erste geometrische Beziehung für jeden der Vielzahl von zweiten Bildframes unter Verwendung von mindestens einem der Vielzahl von übereinstimmenden Punkten zu berechnen; und

beim Entfernen der erste Erfüllungsgrad der berechneten ersten geometrischen Beziehung durch jeden der übereinstimmenden Punkte berechnet wird,

beim Berechnen eines ersten Erfüllungsgrades der ersten geometrischen Beziehung eine Fundamentalmatrix in Epipolarbedingung unter Verwendung von mindestens einem der Vielzahl von übereinstimmenden Punkten berechnet wird,

beim Entfernen der erste Erfüllungsgrad der Epipolarbedingung durch jeden der übereinstimmenden Punkte unter Verwendung der Fundamentalmatrix berechnet wird, und beim Bestimmen ein zweiter Bildframe, für den eine Anzahl von übereinstimmenden Punkten nach dem Entfernen größer als ein Schwellenwert ist, als ein zweiter Bildframe bestimmt wird, der mit dem ersten Bildframe zu synchronisieren ist.

5. Videosynchronisationsverfahren, das umfasst:

einen Ermittlungsschritt (S12) zum Ermitteln eines ersten Merkmalspunkts in einem ersten Bildframe in einem ersten Video und eines zweiten Merkmalspunkts in jedem einer Vielzahl von zweiten Bildframes in einem zweiten Video;

einen Extraktionsschritt (S14) zum Extrahieren übereinstimmender Punkte, die ein Satz des ersten Merkmalspunkts und eines zweiten Merkmalspunkts sind, der dem ersten Merkmalspunkt ähnlich ist; und

einen Synchronisationsschritt (S15, S16) zum Bestimmen eines zweiten Bildframes, der mit dem ersten Bildframe zu synchronisieren ist, basierend auf einem ersten Erfüllungsgrad einer ersten geometrischen Beziehung zwischen jedem zweiten Bild und dem ersten Bild durch einen Übereinstimmungspunkt in jedem zweiten Bild; **dadurch gekennzeichnet, dass**

die erste geometrische Beziehung eine Epipolarbedingung ist; und

der erste Erfüllungsgrad der ersten geometrischen Beziehung auf der Grundlage eines Ergebnisses bestimmt wird, das unter Verwendung einer Fundamentalmatrix in der Epipolarbedingung berechnet wird,

in dem Extraktionsschritt (S14) eine Vielzahl der übereinstimmenden Punkte aus jedem der Vielzahl von zweiten Bildframes extrahiert werden; und

der Synchronisationsschritt (S15, S16) beinhaltet:

einen Entfernungsschritt (S24) zum Berechnen, für jeden der Vielzahl von zweiten Bildframes, des ersten Erfüllungsgrades der ersten geometrischen Beziehung durch jeden der Vielzahl von übereinstimmenden Punkten und zum Entfernen, aus der Vielzahl von übereinstimmenden Punkten, eines übereinstimmenden Punktes, für den der berechnete erste Grad niedriger als ein Schwellenwert ist; und

einen Bestimmungsschritt (S16) zum Bestimmen eines zweiten Bildframes, der mit dem ersten Bildframe zu synchronisieren ist, aus der Vielzahl der zweiten Bildframes, basierend auf einem übereinstimmenden Punkt nach dem Entfernen, der für jeden der Vielzahl von zweiten Bildframes erhalten wurde,

wobei der Synchronisationsschritt (S15) ferner einen Berechnungsschritt (S21) zum Berechnen der ersten geometrischen Beziehung für jeden der Vielzahl von zweiten Bildframes unter Verwendung von mindestens einem der Vielzahl von übereinstimmenden Punkten beinhaltet; und

in dem Entfernungsschritt (S24) der erste Erfüllungsgrad der berechneten ersten geometrischen Beziehung durch jeden der übereinstimmenden Punkte berechnet wird,

in dem Berechnungsschritt (S21) eine Fundamentalmatrix in Epipolarbedingung unter Verwendung von mindestens einem der Vielzahl von übereinstimmenden Punkten berechnet wird,

in dem Entfernungsschritt (S24) der erste Erfüllungsgrad der Epipolarbedingung durch jeden der übereinstimmenden Punkte unter Verwendung der Fundamentalmatrix berechnet wird, und

in dem Bestimmungsschritt (S16) ein zweiter Bildframe, für den eine Anzahl von übereinstimmenden Punkten nach dem Entfernen größer als ein Schwellenwert ist, als ein zweiter Bildframe bestimmt wird, der mit dem ersten Bildframe zu synchronisieren ist.

6. Programm zum Veranlassen eines Computers zur Ausführung des Videosynchronisationsverfahrens nach Anspruch 5.

7. System, umfassend:

eine Vielzahl von Kameras; und
die Videosynchronisationsvorrichtung nach einem der Ansprüche 1 bis 3 zum Synchronisieren einer Vielzahl von Videos, die von der Vielzahl von Kameras aufgenommen wurden.

**Revendications**

1. Appareil de synchronisation vidéo comprenant :

un processeur (220) ; et
un dispositif de stockage connecté au processeur (220),
dans lequel le processeur (220) est adapté pour effectuer
une étape de détection consistant à détecter un premier point caractéristique dans une première trame d'image dans une première vidéo, et un deuxième point caractéristique dans chacune d'une pluralité de deuxièmes trames d'image dans une deuxième vidéo ;
une étape d'extraction consistant à extraire des points de correspondance qui sont un ensemble du premier point caractéristique et d'un deuxième point caractéristique qui est similaire au premier point caractéristique ; et
une étape de synchronisation consistant à déterminer une deuxième trame d'image à synchroniser avec la première trame d'image, sur la base d'un premier degré de satisfaction, par un point de correspondance dans chaque deuxième trame d'image, d'une première relation géométrique entre chaque deuxième trame d'image et la première trame d'image ;
**caractérisé en ce que**
la première relation géométrique est une contrainte épipolaire ; et
le premier degré de satisfaction de la première relation géométrique est déterminé sur la base d'un résultat calculé en utilisant une matrice fondamentale dans la contrainte épipolaire,
lors de l'étape d'extraction, une pluralité de points de correspondance sont extraits de chacune de la pluralité de deuxièmes trames d'image ; et
l'étape de synchronisation comprend :

une étape de suppression consistant à calculer, pour chacune de la pluralité de deuxièmes trames d'image, le premier degré de satisfaction de la première relation géométrique par chacun de la pluralité de points de correspondance, et à supprimer, de la pluralité de points de correspondance, un point de correspondance pour lequel le premier degré calculé est inférieur à un seuil ; et
une étape de détermination consistant à déterminer une deuxième trame d'image à synchroniser avec la première trame d'image, parmi la pluralité de deuxièmes trames d'image, sur la base d'un point de correspondance après la suppression obtenu pour chacune de la pluralité de deuxièmes trames d'image,
l'étape de synchronisation comprend en outre une étape de calcul consistant à calculer la première relation géométrique pour chacune de la pluralité de deuxièmes trames d'image en utilisant au moins un point de la pluralité de points de correspondance ; et
lors de l'étape de suppression, le premier degré de satisfaction de la première relation géométrique calculée par chacun des points de correspondance est calculé,
lors de l'étape de calcul, une matrice fondamentale dans la contrainte épipolaire est calculée en utilisant au moins un point de la pluralité de points de correspondance,
lors de l'étape de suppression, le premier degré de satisfaction de la contrainte épipolaire par chacun des points de correspondance est calculé en utilisant la matrice fondamentale, et
lors de l'étape de détermination, une deuxième trame d'image pour laquelle un nombre de points de correspondance après la suppression est supérieur à un seuil est déterminée en tant que deuxième trame d'image à synchroniser avec la première trame d'image.

2. Appareil de synchronisation vidéo selon la revendication 1, dans lequel lors de l'étape de détection, le premier point caractéristique et le deuxième point caractéristique sont détectés sur la base d'un contour d'un sujet et/ou d'une différence de luminance et/ou d'une différence de couleur.

3. Appareil de synchronisation vidéo selon la revendication 1, dans lequel
lors de l'étape de détection, un troisième point caractéristique dans chacune d'une pluralité de troisièmes trames d'image dans une troisième vidéo est en outre détecté :

lors de l'étape d'extraction, un ensemble du premier point caractéristique et d'un troisième point caractéristique qui est similaire au premier point caractéristique, et un ensemble du deuxième point caractéristique et d'un troisième point caractéristique qui est similaire au deuxième point caractéristique sont en outre extraits comme étant les points de correspondance ; et
lors de l'étape de synchronisation, le premier degré est calculé pour chacune des combinaisons comprenant une première trame d'image, une de la pluralité de deuxièmes trames d'image et une de la pluralité de troisièmes trames d'image, et une première trame d'image, une deuxième trame d'image, et une troisième trame d'image incluses dans une combinaison pour laquelle le premier degré calculé est élevé, parmi une pluralité de combinaisons, sont synchronisées.

4. Appareil de synchronisation vidéo comprenant :

un détecteur (232) adapté pour détecter un premier point caractéristique dans une première trame d'image dans une première vidéo, et un deuxième point caractéristique dans chacune d'une pluralité de deuxièmes trames d'image dans une deuxième vidéo ;

un extracteur (233) adapté pour extraire des points de correspondance qui sont un ensemble du premier point caractéristique et d'un deuxième point caractéristique qui est similaire au premier point caractéristique ; et

un synchroniseur (222, 234) adapté pour déterminer une deuxième trame d'image à synchroniser avec la première trame d'image, sur la base d'un premier degré de satisfaction, par un point de correspondance dans chaque deuxième trame d'image, d'une première relation géométrique entre chaque deuxième trame d'image et la première trame d'image ;

**caractérisé en ce que**

la première relation géométrique est une contrainte épipolaire ; et

le premier degré de satisfaction de la première relation géométrique est déterminé sur la base d'un résultat calculé en utilisant une matrice fondamentale dans la contrainte épipolaire,

l'extracteur (233) est adapté pour extraire une pluralité de points de correspondance de chacune de la pluralité de deuxièmes trames d'image ; et

le synchroniseur (223, 234) est adapté pour calculer, pour chacune de la pluralité de deuxièmes trames d'image, le premier degré de satisfaction de la première relation géométrique par chacun de la pluralité de points de correspondance, et pour supprimer, de la pluralité de points de correspondance points, un point de correspondance pour lequel le premier degré calculé est inférieur à un seuil ; et

pour déterminer une deuxième trame d'image à synchroniser avec la première trame d'image,

parmi la pluralité de deuxièmes trames d'image, sur la base d'un point de correspondance après la suppression obtenu pour chacune de la pluralité de deuxièmes trames d'image,

le synchroniseur (223, 234) est en outre adapté pour calculer la première relation géométrique pour chacune de la pluralité de deuxièmes trames d'image en utilisant au moins un point de la pluralité de points de correspondance ; et

lors de la suppression, le premier degré de satisfaction de la première relation géométrique calculée par chacun des points de correspondance est calculé,

lors du calcul d'un premier degré de satisfaction de la première relation géométrique, une matrice fondamentale dans la contrainte épipolaire est calculée en utilisant au moins un point de la pluralité de points de correspondance,

lors de la suppression, le premier degré de satisfaction de la contrainte épipolaire par chacun des points de correspondance est calculé en utilisant la matrice fondamentale, et

lors de la détermination, une deuxième trame d'image pour laquelle un nombre de points de correspondance après la suppression est supérieur à un seuil est déterminée en tant que deuxième trame d'image à synchroniser avec la première trame d'image.

5. Procédé de synchronisation vidéo comprenant :

une étape de détection (S12) consistant à détecter un premier point caractéristique dans une première trame d'image dans une première vidéo, et un deuxième point caractéristique dans chacune d'une pluralité de deuxièmes trames d'image dans une deuxième vidéo ;

une étape d'extraction (S14) consistant à extraire des points de correspondance qui sont un ensemble du premier point caractéristique et d'un deuxième point caractéristique qui est similaire au premier point caractéristique ; et

une étape de synchronisation (S15, S16) consistant à déterminer une deuxième trame d'image à synchroniser avec la première trame d'image, sur la base d'un premier degré de satisfaction, par un point de correspondance dans chaque deuxième trame d'image, d'une première relation géométrique entre chaque deuxième trame d'image et la première trame d'image ;

**caractérisé en ce que**

la première relation géométrique est une contrainte épipolaire ; et

le premier degré de satisfaction de la première relation géométrique est déterminé sur la base d'un résultat calculé en utilisant une matrice fondamentale dans la contrainte épipolaire,

lors de l'étape d'extraction (S14), une pluralité de points de correspondance sont extraits de chacune de la pluralité de deuxièmes trames d'image ; et

l'étape de synchronisation (S15, S16) comprend :

une étape de suppression (S24) consistant à calculer, pour chacune de la pluralité de deuxièmes trames d'image, le premier degré de satisfaction de la première relation géométrique par chacun de la pluralité de points de correspondance, et à supprimer, de la pluralité de points de correspondance, un point de correspondance pour lequel le premier degré calculé est inférieur à un seuil ; et

une étape de détermination (S16) consistant à déterminer une deuxième trame d'image à synchroniser avec la première trame d'image, parmi la pluralité de deuxièmes trames d'image, sur la base d'un point de correspondance après la suppression obtenu pour chacune de la pluralité de deuxièmes trames d'image, l'étape de synchronisation (S15) comprend en outre une étape de calcul (S21) consistant à calculer la première relation géométrique pour chacune de la pluralité de deuxièmes trames d'image en utilisant au moins un point de la pluralité de points de correspondance ; et

lors de l'étape de suppression (S24), le premier degré de satisfaction de la première relation géométrique calculée par chacun des points de correspondance est calculé,

lors de l'étape de calcul (S21), une matrice fondamentale dans la contrainte épipolaire est calculée en utilisant au moins un point de la pluralité de points de correspondance,

lors de l'étape de suppression (S24), le premier degré de satisfaction de la contrainte épipolaire par chacun des points de correspondance est calculé en utilisant la matrice fondamentale, et

lors de l'étape de détermination (S16), une deuxième trame d'image pour laquelle un nombre de points de correspondance après la suppression est supérieur à un seuil est déterminée en tant que deuxième trame d'image à synchroniser avec la première trame d'image.

6. Programme pour amener un ordinateur à exécuter le procédé de synchronisation vidéo selon la revendication 5.

7. Système comprenant :

une pluralité de caméras ; et

l'appareil de synchronisation vidéo selon l'une des revendications 1 à 3 pour synchroniser une pluralité de vidéos capturées par la pluralité de caméras.

## FIG. 1

## FIG. 2

**220 SYNCHRONIZATION PROCESSOR**

**221 FEATURE QUANTITY EXTRACTOR**

112 → **231 FRAME ACQUIRER** → 121 → **232 FEATURE POINT DETECTOR** → 122 → **233 FEATURE POINT MATCHER**

123 → **234 MATCHING INFORMATION CORRECTOR**

124 FUNDAMENTAL MATRIX F

**222 SYNCHRONIZATION INFORMATION ACQUIRER**

**241 THREE-DIMENSIONAL RECONSTRUCTOR** → 125 → **242 CANDIDATE SYNCHRONIZATION FRAME EXTRACTOR** → 126 → **243 SYNCHRONIZATION FRAME DETERMINER** → 112, 113, 114

EP 3 316 589 B1

## FIG. 3

SUBJECT

CAMERA 1    CAMERA 2

FRAME 1    FRAME 2

CORRECTLY MATCHED MATCHING POINTS
MATCHING POINTS 1 (x1, y1), (x'1, y'1)
MATCHING POINTS 2 (x2, y2), (x'2, y'2)

MISMATCHED MATCHING POINTS
MATCHING POINTS 3 (x3, y3), (x'3, y'3)

MATCHING INFORMATION

EP 3 316 589 B1

*FIG. 4*

# FIG. 5

```
                    ┌─────────┐
                    │  START  │
                    └─────────┘
                         │
                         ▼
    ┌─────────────────────────────────────────┐
    │           ACQUIRE FRAME                  │ ⟋S11
    └─────────────────────────────────────────┘
                         │
                         ▼
    ┌─────────────────────────────────────────┐
    │   EXTRACT FEATURE POINT IN EACH FRAME    │ ⟋S12
    └─────────────────────────────────────────┘
                         │
                         ▼
    ╱─────────────────────────────────────────╲
   ╱               LOOP 1                       ╲
  ╱    REPEAT UNTIL THERE ARE NO MORE            ╲
 ╱  TWO FRAMES WHICH ARE NOT YET MATCHED          ╲
╱───────────────────────────────────────────────────╲
                         │
                         ▼
    ┌─────────────────────────────────────────┐
    │ SELECT TWO FRAMES WHICH ARE NOT YET MATCHED │ ⟋S13
    │    (SELECT FROM TWO DIFFERENT VIDEOS)    │
    └─────────────────────────────────────────┘
                         │
                         ▼
    ┌─────────────────────────────────────────┐
    │    PERFORM MATCHING OF FEATURE POINTS    │ ⟋S14
    └─────────────────────────────────────────┘
                         │
                         ▼
    ┌─────────────────────────────────────────┐
    │ CORRECT MATCHING INFORMATION BASED ON    │ ⟋S15
    │ GEOMETRIC RELATIONSHIP BETWEEN FRAMES    │
    └─────────────────────────────────────────┘
                         │
                         ▼
    ╲───────────────────────────────────────────╱
     ╲               LOOP 1                     ╱
      ╲───────────────────────────────────────╱
                         │
                         ▼
    ┌─────────────────────────────────────────┐
    │ DETERMINE SYNCHRONIZATION FRAMES BASED ON │ ⟋S16
    │ GEOMETRIC RELATIONSHIP BETWEEN FRAMES    │
    │    BY USING MATCHING INFORMATION         │
    └─────────────────────────────────────────┘
                         │
                         ▼
                    ┌─────────┐
                    │   END   │
                    └─────────┘
```

37

## FIG. 6

S15

START

CALCULATE FUNDAMENTAL MATRIX IN EPIPOLAR CONSTRAINT BY USING COORDINATES OF PLURALITY OF MATCHING POINTS IN TWO FRAMES — S21

LOOP 2
REPEAT UNTIL THERE ARE NO MORE MATCHING POINTS WHICH ARE NOT YET PROCESSED

SELECT MATCHING POINTS WHICH ARE NOT YET PROCESSED — S22

S23

MATCHING POINTS SATISFY EPIPOLAR CONSTRAINT? — YES

NO

EXCLUDE MATCHING POINTS CURRENTLY SELECTED — S24

LOOP 2

END

# FIG. 7

_S16_

START

LOOP 3
REPEAT UNTIL THERE ARE NO MORE TWO FRAMES FOR
WHICH ESTIMATED INFORMATION IS NOT YET EXTRACTED

SELECT TWO FRAMES FOR WHICH ESTIMATED
INFORMATION IS NOT YET EXTRACTED
(SELECT FROM TWO DIFFERENT VIDEOS) — S31

DETERMINE ESSENTIAL MATRIX BETWEEN TWO FRAMES,
AND OBTAIN ROTATION MATRIX
AND TRANSLATION VECTOR FROM ESSENTIAL MATRIX — S32

ESTIMATE COORDINATE POSITION OF MATCHING POINTS
IN THREE-DIMENSIONAL SPACE BY USING ROTATION MATRIX
AND TRANSLATION VECTOR,
AND EXTRACT ESTIMATED INFORMATION — S33

S34

ESTIMATED INFORMATION
SATISFIES SYNCHRONIZATION CONDITION THAT IS
BASED ON GEOMETRIC RELATIONSHIP
BETWEEN FRAMES?

NO

YES

TAKE TWO FRAMES CURRENTLY SELECTED AS
CANDIDATE SYNCHRONIZATION FRAMES — S35

LOOP 3

DETERMINE SYNCHRONIZATION FRAMES
FROM CANDIDATE SYNCHRONIZATION FRAMES — S36

END

## FIG. 8A

| | | | | |
|---|---|---|---|---|
| V1_1 | V1_2 | V1_3 | V1_4 | V1_5 |
| V2_1 | V2_2 | V2_3 | V2_4 | V2_5 |
| V3_1 | V3_2 | V3_3 | V3_4 | V3_5 |

## FIG. 8B

| | | | | |
|---|---|---|---|---|
| V1_1 | V1_2 | V1_3 | V1_4 | V1_5 |
| V2_1 | V2_2 | V2_3 | V2_4 | V2_5 |
| V3_1 | V3_2 | V3_3 | V3_4 | V3_5 |

## FIG. 9A

## FIG. 9B

## FIG. 10A

## FIG. 10B

## FIG. 11A

| | | | | | |
|---|---|---|---|---|---|
| VIDEO V1 (FRAME RATE: 15 fps) | V1_1 | V1_2 | V1_3 | V1_4 | V1_5 |
| VIDEO V2 (FRAME RATE: 30 fps) | V2_1 | V2_2 | V2_3 | V2_4 | V2_5 |

## FIG. 11B

| | | | | | |
|---|---|---|---|---|---|
| VIDEO V1 (FRAME RATE: 15 fps) | V1_1 | V1_2 | V1_3 | V1_4 | V1_5 |
| VIDEO V2 (FRAME RATE: 30 fps) | V2_1 | V2_2 | V2_3 | V2_4 | V2_5 |

## FIG. 12A

## FIG. 12B

# FIG. 13

S16

START

LOOP 4
REPEAT UNTIL THERE IS NO MORE COMBINATION OF FRAMES
FOR WHICH ESTIMATED INFORMATION IS NOT YET EXTRACTED

SELECT COMBINATION OF FRAMES FOR WHICH
ESTIMATED INFORMATION IS NOT YET EXTRACTED
(SELECT ONE FRAME FROM EACH VIDEO) — S41

DETERMINE ESSENTIAL MATRIX BETWEEN ALL SELECTED FRAMES,
AND ACQUIRE ROTATION MATRIX
AND TRANSLATION VECTOR FROM ESSENTIAL MATRIX — S42

ESTIMATE COORDINATE POSITION, IN THREE-DIMENSIONAL SPACE,
OF MATCHING POINTS IN ALL SELECTED FRAMES
BY USING ROTATION MATRIX AND TRANSLATION VECTOR,
AND EXTRACT ESTIMATED INFORMATION — S43

ESTIMATED INFORMATION
SATISFIES SYNCHRONIZATION
CONDITION? — S44    NO

YES

DELETE PREVIOUS CANDIDATE SYNCHRONIZATION FRAME,
AND TAKE ALL FRAMES CURRENTLY SELECTED AS
CANDIDATE SYNCHRONIZATION FRAMES — S45

UPDATE SYNCHRONIZATION CONDITION — S46

LOOP 4

DETERMINE CANDIDATE SYNCHRONIZATION FRAMES
AS SYNCHRONIZATION FRAMES — S47

END

## FIG. 14A

| V1_1 | V1_2 | V1_3 | V1_4 | V1_5 |
| V2_1 | V2_2 | V2_3 | V2_4 | V2_5 |
| V3_1 | V3_2 | V3_3 | V3_4 | V3_5 |

## FIG. 14B

| V1_1 | V1_2 | V1_3 | V1_4 | V1_5 |
| V2_1 | V2_2 | V2_3 | V2_4 | V2_5 |
| V3_1 | V3_2 | V3_3 | V3_4 | V3_5 |

FIG. 15

## FIG. 16

MATCH "+" WITH CENTER OF SOCCER BALL DISPLAYED
IN NORTH OF STADIUM AND TOUCH CAMERA DISPLAY.

## FIG. 17

EP 3 316 589 B1

ex200

ex203

ex500

ex216

ex211

ex206

ex215

ex207

ex201

ex204

ex208

ex212

INTERNET

COMMUNICATION
NETWORK

ex209

ex213

ex202

ex210

ex214

FIG. 18

FIG. 19

ex214

ex457

ex465

ex458, ex466

ex456

# FIG. 20

**EP 3 316 589 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010268325 A

- US 2014078332 A1

**Non-patent literature cited in the description**

- **DANIEL WEDGE.** VIDEO SEQUENCE SYNCHRO-NIZATION. *Thesis,* 02 July 2007